(19) **Europäisches Patentamt / European Patent Office / Office européen des brevets**

(11) **EP 3 889 844 B1**

(12) **EUROPEAN PATENT SPECIFICATION**

(45) Date of publication and mention of the grant of the patent:
**24.06.2026 Bulletin 2026/26**

(21) Application number: **18944316.1**

(22) Date of filing: **29.12.2018**

(51) International Patent Classification (IPC):
**G06N 3/045** (2023.01)    **G06N 3/065** (2023.01)
**G06N 3/0464** (2023.01)

(52) Cooperative Patent Classification (CPC):
**G06N 3/065; G06N 3/045; G06N 3/0464**

(86) International application number:
**PCT/CN2018/125761**

(87) International publication number:
**WO 2020/133463 (02.07.2020 Gazette 2020/27)**

(54) **NEURAL NETWORK SYSTEM AND DATA PROCESSING TECHNOLOGY**

NEURONALES NETZWERKSYSTEM UND DATENVERARBEITUNGSTECHNOLOGIE

SYSTÈME DE RÉSEAU NEURONAL ET TECHNOLOGIE DE TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.10.2021 Bulletin 2021/40**

(73) Proprietor: **Huawei Technologies Co., Ltd.**
**Shenzhen Guangdong 518129 (CN)**

(72) Inventors:
- **LIU, Zhe**
 **Shenzhen, Guangdong 518129 (CN)**
- **ZENG, Zhong**
 **Shenzhen, Guangdong 518129 (CN)**
- **WANG, Tieying**
 **Shenzhen, Guangdong 518129 (CN)**
- **DUAN, Xiaoxiang**
 **Shenzhen, Guangdong 518129 (CN)**
- **ZHANG, Huimin**
 **Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
**CN-A- 107 085 562      CN-A- 107 871 163**
**CN-A- 108 470 009      CN-A- 108 805 262**
**US-A1- 2018 113 649     US-B2- 10 096 134**

- **LI JIAJUN LIJIAJUN@ICT AC CN ET AL: "SynergyFlow", ACM TRANSACTIONS ON DESIGN AUTOMATION OF ELECTRONIC SYSTEMS, ACM, NEW YORK, NY, US, vol. 24, no. 1, 21 December 2018 (2018-12-21), pages 1 - 27, XP058456455, ISSN: 1084-4309, DOI: 10.1145/ 3275243**
- **ALI SHAFIEE ET AL: "ISAAC", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 44, no. 3, 18 June 2016 (2016-06-18), pages 14 - 26, XP058300608, ISSN: 0163-5964, DOI: 10.1145/ 3007787.3001139**

## Description

### TECHNICAL FIELD

This application relates to the field of computer technologies, and in particular, to a neural network system and a data processing technology.

### BACKGROUND

Deep learning (DL) is an important branch of artificial intelligence (AI). The deep learning is used for constructing a neural network through simulating a human brain, to achieve a better recognition effect than a conventional shallow learning manner. A convolutional neural network (CNN) is a most common deep learning architecture, and is also a deep learning method widely studied most. A typical processing field of the convolutional neural network is image processing. The image processing is an application for recognizing and analyzing an input image and finally outputting a group of classified image content. For example, a convolutional neural network algorithm may be used to extract a body color, a license plate number, and a model of a vehicle on an image and perform outputting after classification.

In the convolutional neural network, a feature of an image is usually extracted by using a three-layer sequence: a convolutional layer, a pooling layer, and a rectified liner unit (ReLU). A process of extracting a feature of an image is actually a process including a series of matrix operations (for example, a matrix multiply-add operation). Therefore, how to quickly process images in a network in parallel becomes a problem that needs to be studied for the convolutional neural network. The publication from LI JIAJUN LIJIAJUN@ICT AC CN ET AL, titled, "SynergyFlow", ACM TRANSACTIONS ON DESIGN AUTOMATION OF ELECTRONIC SYSTEMS, ACM, NEW YORK, NY, US, (20181221), vol. 24, no. 1, doi:10.1145/3275243, ISSN 1084-4309, pages 1 - 27. describes an elastic accelerator architecture which supports layer-level and model-level parallelism for large-scale deep neural networks.
US2018113649A1 describes a method which includes receiving, in a memory, input data to be processed in a first and a second processing layer.
The publication from ALI SHAFIEE ET AL, titled, "ISAAC", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, (20160618), vol. 44, no. 3, doi:10.1145/3007787.3001139, ISSN 0163-5964, pages 14 - 26, describes a convolutional neural network accelerator with in-situ analog arithmetic in crossbars.

### SUMMARY

This application provides a neural network system and a data processing method, to improve a data processing rate in a neural network.

According to a first aspect, an embodiment of the present invention provides a neural network system according to appended claim 1.

With reference to the first aspect, in a first possible implementation, the neural network system includes a plurality of neural network chips. Each neural network chip includes a plurality of level 2 computing nodes. Each level 2 computing node includes a plurality of computing units. Each computing unit includes at least one resistive random access memory crossbar ReRAM crossbar.

The deployment requirement may include a computing delay. The first neural network layer is a beginning layer of all neural network layers in the neural network system. The value of N is determined based on the data volume of the first output data, the computing delay, and a computing frequency of a ReRAM crossbar; and the value of M is determined based on the value of N and the ratio of the data volume of the first output data to the data volume of the second output data.

In a possible implementation, when the first neural network layer is the beginning layer of all the neural network layers in the neural network system, the value of N may be obtained according to the following formula:

$$n_{replicas}^1 = \left\lceil \frac{FM_{out}^1.x \ * \ FM_{out}^1.y}{t \ * \ f} \right\rceil$$

Herein, $n_{replicas}^1$ is used to indicate a quantity N of weights that need to be configured for the first neural network layer, $FM_{out}^1.x$ is a row quantity of output data of the first neural network layer, $FM_{out}^1.y$ is a column quantity of the output data of the first neural network layer, t is a specified computing delay, and f is a computing frequency of a crossbar in a computing unit. The value of M may be calculated according to the following formula: N/M = the data volume of the first output data / the data volume of the second output data.

The deployment requirement may include a quantity of neural network chips. The first neural network layer is a beginning layer of all neural network layers in the neural network system. The value of N is determined based on the quantity of chips, a quantity of ReRAM crossbars in each chip, a quantity of ReRAM crossbars that are required for deploying a weight of each neural network layer, and a data volume ratio of output data of adjacent neural network layers; and the value of M is determined based on the value of N and the ratio of the data volume of the first output data to the data volume of the second output data.

Specifically, in a possible implementation, when the deployment requirement is the quantity of chips required in the neural network system, and the first neural network layer is the beginning layer in the neural network system, the N first weights that need to be configured for the first neural network layer and the M second weights that need to be configured for the second neural network layer may be obtained according to the following two formulas, where the value of N is a value of $n^1_{replicas}$, and the value of M is a value of $n^2_{replicas}$.

$$ xb_1 * n^1_{replicas} + xb_2 * n^2_{replicas} + \cdots + xb_n * n^n_{replicas} \leq K * L $$

$$ \frac{n^{i-1}_{replicas}}{n^i_{replicas}} = \left\lceil \frac{FM^{i-1}_{out}.x * FM^{i-1}_{out}.y}{FM^i_{out}.x * FM^i_{out}.y} \right\rceil $$

Herein, $xb_1$ is used to indicate a quantity of crossbars that are required for deploying a weight of a first (or referred to as a beginning) neural network layer, $n^1_{replicas}$ is used to indicate a quantity of weights required for the beginning layer, $xb_2$ is used to indicate a quantity of crossbars that are required for deploying a weight of the second neural network layer, $n^2_{replicas}$ is used to indicate a quantity of weights required for the second neural network layer, $xb_n$ is used to indicate a quantity of crossbars that are required for deploying a weight of an $n^{th}$ neural network layer, $n^n_{replicas}$ is used to indicate a quantity of weights required for the $n^{th}$ neural network layer, K is a quantity of chips that are required in the deployment requirement for the neural network system, L is a quantity of crossbars in each chip, $n^i_{replicas}$ is used to indicate a quantity of weights required for an $i^{th}$ layer, $n^{i-1}_{replicas}$ is used to indicate a quantity of weights required for an $(i-1)^{th}$ layer, $FM^i_{out}.x$ is used to indicate a row quantity of output data of the $i^{th}$ layer, $FM^i_{out}.y$ is used to indicate a column quantity of the output data of the $i^{th}$ layer, $FM^{i-1}_{out}.x$ is used to indicate a row quantity of output data of the $(i-1)^{th}$ layer, $FM^{i-1}_{out}.y$ is used to indicate a column quantity of the output data of the $(i-1)^{th}$ layer, a value of i may be from 2 to n, and n is a total layer quantity of the neural network layers in the neural network system.

With reference to any one of the possible implementations of the first aspect, in a fifth possible implementation, at least some of the P computing units and at least some of the Q computing units are located in a same level 2 computing node.

With reference to any one of the possible implementations of the first aspect, in a sixth possible implementation, at least some of level 2 computing nodes to which the P computing units belong and at least some of level 2 computing nodes to which the Q computing units belong are located in a same neural network chip.

With reference to the first aspect or any one of the possible implementations of the first aspect, in another possible implementation, that the ratio of N to M corresponds to the ratio of the data volume of the first output data to the data volume of the second output data includes: The ratio of N to M is the same as the ratio of the data volume of the first output data to the data volume of the second output data.

According to a second aspect, this application provides a data processing method applied to a neural network system according to appended claim 7.

With reference to the second aspect, in a first possible implementation, the first neural network layer is a beginning layer of all neural network layers in the neural network system. A value of N is determined based on the data volume of the first output data, a specified computing delay in the neural network system, and a computing frequency of a ReRAM crossbar in a computing unit; and a value of M is determined based on the value of N and the ratio of the data volume of the first output data to the data volume of the second output data.

With reference to the second aspect, in a second possible implementation, the neural network system includes a plurality of neural network chips. Each neural network chip includes a plurality of computing units. Each computing unit includes at least one resistive random access memory crossbar ReRAM crossbar. The first neural network layer is a beginning layer in the neural network system. A value of N is determined based on a quantity of the plurality of neural network chips, a quantity of ReRAM crossbars in each chip, a quantity of ReRAM crossbars that are required for deploying a weight of each neural network layer, and a volume ratio of output data of adjacent neural network layers; and a value of M is determined based on the value of N and the ratio of the data volume of the first output data to the data volume of the second output data.

With reference to the second aspect or either one of the possible implementations of the second aspect, in a third possible implementation, the neural network system includes the plurality of neural network chips. Each neural network chip includes a plurality of level 2 computing nodes. Each level 2 computing node includes the plurality of computing units. At least some of the P computing units and at least some of the Q computing units are located in a same level 2 computing node.

With reference to the third possible implementation of the second aspect, in another possible implementation, at least some of level 2 computing nodes to which the P computing units belong and at least some of level 2 computing nodes to which the Q computing units belong are located in a same neural network chip.

With reference to the second aspect or any one of the possible implementations of the second aspect, in another possible implementation, the ratio of N to M is the same as the ratio of the data volume of the first output data to the data volume of the second output data.

According to a third aspect, this application further provides a computer program product according to appended claim 12.

According to a fourth aspect, this application further provides a computer-readable storage medium according to appended claim 13.

## BRIEF DESCRIPTION OF DRAWINGS

To describe technical solutions in embodiments of the present invention more clearly, the following briefly describes the accompanying drawings for describing the embodiments. Apparently, the accompanying drawings in the following description show merely some embodiments of the present invention.

FIG. 1 is a schematic structural diagram of a neural network system according to an embodiment of the present invention;

FIG. 1A is a schematic structural diagram of another neural network system according to an embodiment of the present invention;

FIG. 2 is a schematic structural diagram of a computing node in a neural network chip according to an embodiment of the present invention;

FIG. 3 is a schematic diagram of a logic structure of neural network layers in a neural network system according to an embodiment of the present invention;

FIG. 4 is a schematic diagram of computing node sets for processing data of different neural network layers in a neural network system according to an embodiment of the present invention;

FIG. 5 is a flowchart of a computing resource allocation method in a neural network system according to an embodiment of the present invention;

FIG. 6 is a flowchart of another computing resource allocation method according to an embodiment of the present invention;

FIG. 6A is a flowchart of a resource mapping method according to an embodiment of the present invention;

FIG. 7 is a schematic diagram of another computing resource allocation method according to an embodiment of the present invention;

FIG. 8 is a flowchart of a data processing method according to an embodiment of the present invention;

FIG. 9 is a schematic diagram of a weight according to an embodiment of the present invention;

FIG. 10 is a schematic structural diagram of a resistive random access memory crossbar (ReRAM crossbar) according to an embodiment of the present invention; and

FIG. 11 is a schematic structural diagram of a resource allocation apparatus according to an embodiment of the present invention.

## DESCRIPTION OF EMBODIMENTS

To make a person skilled in the art understand technical solutions in the present invention better, the following describes the technical solutions in the embodiments of the present invention with reference to the accompanying drawings in the embodiments of the present invention. Apparently, the described embodiments are merely some but not all of the embodiments of the present invention.

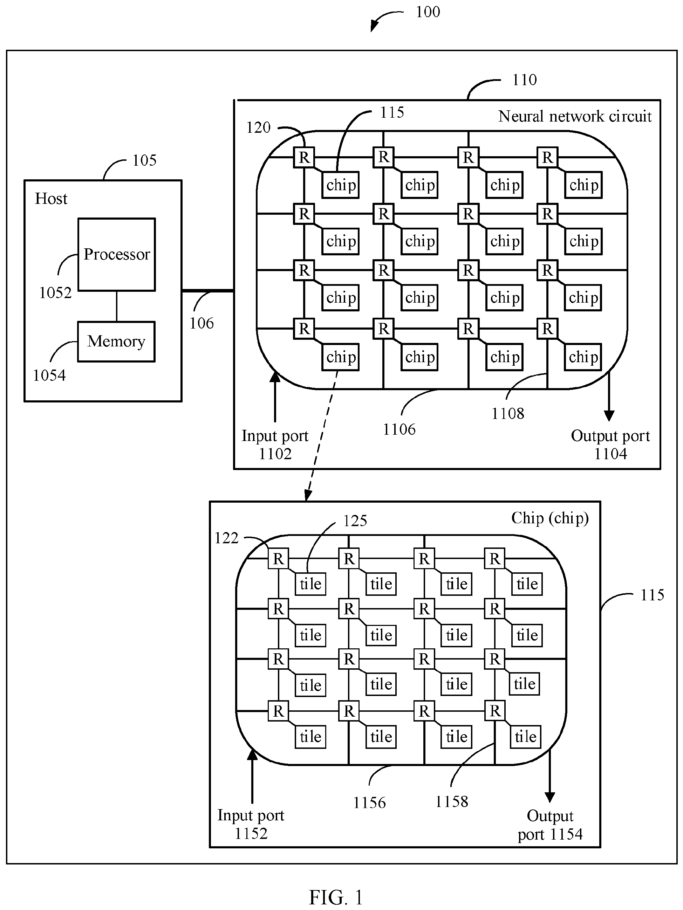

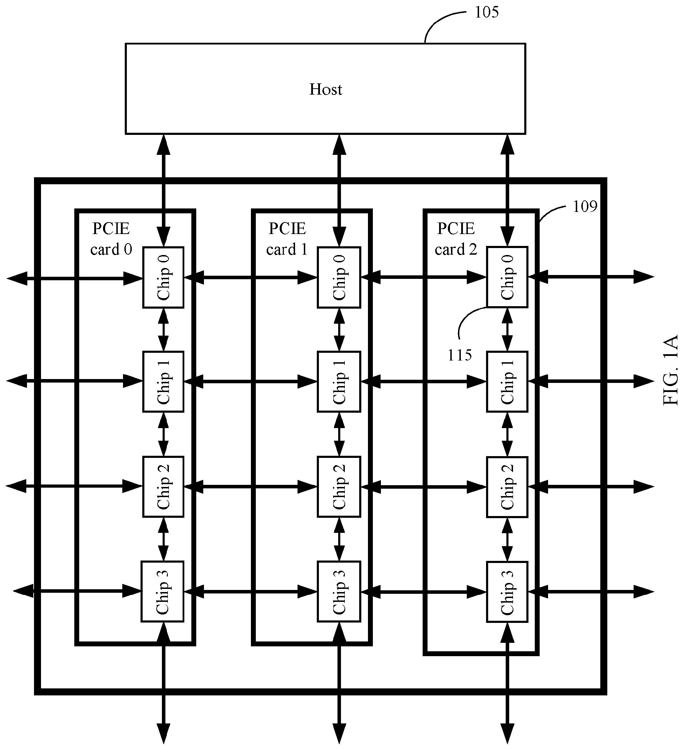

Deep learning (DL) is an important branch of artificial intelligence (AI). The deep learning is used for constructing a neural network through simulating a human brain, to achieve a better recognition effect than a conventional shallow learning manner. An artificial neural network (ANN) is referred to as a neural network (NN) or a neural network-like network. In the field of machine learning and cognitive science, the artificial neural network is a mathematical model or a computing model for simulating a structure and a function of a biological neural network (a central neural system of an animal, especially, a brain), to perform estimation or approximation on a function. The artificial neural network may include a neural network such as a convolutional neural network (CNN), a deep neural network (DNN), or a multilayer perceptron (MLP). FIG. 1 is a schematic structural diagram of an artificial neural network system according to an embodiment of the present invention. FIG. 1 is illustrated by using a convolutional neural network as an example. As shown in FIG. 1, the convolutional neural network system 100 may include a host 105 and a convolutional neural network circuit 110. The convolutional neural network circuit 110 may also be referred to as a neural network accelerator. The convolutional neural network circuit 110 is connected to the host 105 by using a host interface. The host interface may include a standard host interface and a network interface. For example, the host interface may include a peripheral component interconnect express (PCIE) interface. As shown in FIG. 1, the convolutional neural network circuit 110 may be connected to the host 105 by using a PCIE bus 106. Therefore, data may be input to the convolutional neural network circuit 110 by using the PCIE bus 106, and the data obtained after processing performed by the convolutional neural network circuit 110 is received by using the PCIE bus 106. In addition, the host 105 may monitor a working status of the convolutional neural network circuit 110 by using the host interface.

The host 105 may include a processor 1052 and a memory 1054. It should be noted that, in addition to the components shown in FIG. 1, the host 105 may further include other components such as a communications interface and a magnetic disk used as an external memory. This is not limited herein.

The processor 1052 is a computing core and a control core of the host 105. The processor 1052 may include a plurality of processor cores. The processor 1052 may be an integrated circuit with an ultra-large scale. An operating system and another software program are installed in the processor 1052, so that the processor 1052 can access the memory 1054, a cache, a magnetic disk, and a peripheral device (for example, the neural network circuit in FIG. 1). It may be understood that, in this embodiment of the present invention, a core in the processor 1052 may be, for example, a central processing unit (CPU), or may be another specific integrated circuit (ASIC).

The memory 1054 is a main memory of the host 105. The memory 1054 is connected to the processor 1052 by using a double data rate (DDR) bus. The memory 1054 is usually configured to store various software running in the operating system, input data and output data, information exchanged with an external memory, and the like. To improve an access rate of the processor 1052, the memory 1054 needs to have an advantage of a high access rate. In a conventional computer system architecture, a dynamic random access memory (DRAM) is usually used as the memory 1054. The processor 1052 can access the memory 1054 at a high rate by using a memory controller (not shown in FIG. 1), and perform a read operation and a write operation on any storage unit in the memory 1054.

The convolutional neural network (CNN) circuit 110 is a chip array including a plurality of neural network (NN) chips. For example, as shown in FIG. 1, the CNN circuit 110 includes a plurality of NN chips 115 and a plurality of routers 120. For ease of description, the NN chip 115 in this embodiment of the present invention is referred to as the chip 115. The plurality of chips 115 are connected to each other by using the routers 120. For example, one chip 115 may be connected to one or more routers 120. The plurality of routers 120 may form one or more network topologies. Data transmission may be performed between the chips 115 by using the one or more network topologies. For example, the plurality of routers 120 may form a first network 1106 and a second network 1108. The first network 1106 is a ring network, and the second network 1108 is a two-dimensional mesh (2D mesh) network. Therefore, data input from an input port 1102 can be sent to a corresponding chip 115 by using the network including the plurality of routers 120; and data processed by any chip 115 may also be sent to another chip 115 for processing or sent out from an output port 1104, by using the network including the plurality of routers 120.

Further, FIG. 1 also shows a schematic structural diagram of the chip 115. As shown in FIG. 1, the chip 115 may include a plurality of neural network processing units 125 and a plurality of routers 122. FIG. 1 is described by using an example in which a neural network processing unit is a tile. In the architecture of the data processing chip 115 shown in FIG. 1, one tile 125 may be connected to one or more routers 122. The plurality of routers 122 in the chip 115 may form one or more network topologies. Data transmission may be performed between the tiles 125 by using the plurality of network topologies. For example, the plurality of routers 122 may form a first network 1156 and a second network 1158. The first network 1156 is a ring network, and the second network 1158 is a two-dimensional mesh (2D mesh) network. Therefore, data input to the chip 115 from an input port 1152 can be sent to a corresponding tile 125 by using the network including the plurality of routers 122; and data processed by any tile 125 may also be sent to another tile 125 or sent out from an output port 1154, by using the network including the plurality of routers 122.

It should be noted that when the chips 115 are connected to each other by using the routers, the one or more network topologies including the plurality of routers 120 in the convolutional neural network circuit 110 may be the same as or different from the network topologies including the plurality of routers 122 in the data processing chip 115, provided that data transmission can be performed between the chips 115 or between the tiles 125 by using the network topologies and the chips 115 or the tiles 125 can receive data or output data by using the network topologies. In this embodiment of the present invention, a quantity of networks including the plurality of routers 120 and 122 and types of the networks are not limited. In addition, in this embodiment of the present invention, the router 120 may be the same as or different from the router 122. For a clear description, the router 120 connected to the chip and the router 122 connected to the tile are distinguished from each other by using different identifiers in FIG. 1. For ease of description, in this embodiment of the present invention, the chip 115 or the tile 125 in the convolutional neural network system may also be referred to as a computing node.

In actual application, in another case, the chips 115 may be connected to each other by using a high transport interface (High Transport IO) instead of the routers 120. FIG. 1A is a schematic structural diagram of another neural network system according to an embodiment of the present invention. In the neural network system shown in FIG. 1A, a host 105 is connected to a plurality of PCIE cards 109 by using PCIE interfaces 107. Each PCIE card 109 may include a plurality of neural network chips 115. The neural network chips are connected by using a high-speed interconnect interface. An interconnect manner between the chips is not limited herein. It may be understood that, in actual application, tiles in the chip may be not connected by using the routers. Instead, the tiles use the high-speed interconnect manner between the chips shown in FIG. 1A. In another case, tiles in the chip may be alternatively connected by using the routers shown in FIG. 1, and the chips are connected by using the high-speed interconnect manner shown in FIG. 1A. A manner of connection between the chips or inside the chip is not limited in this embodiment of the present invention.

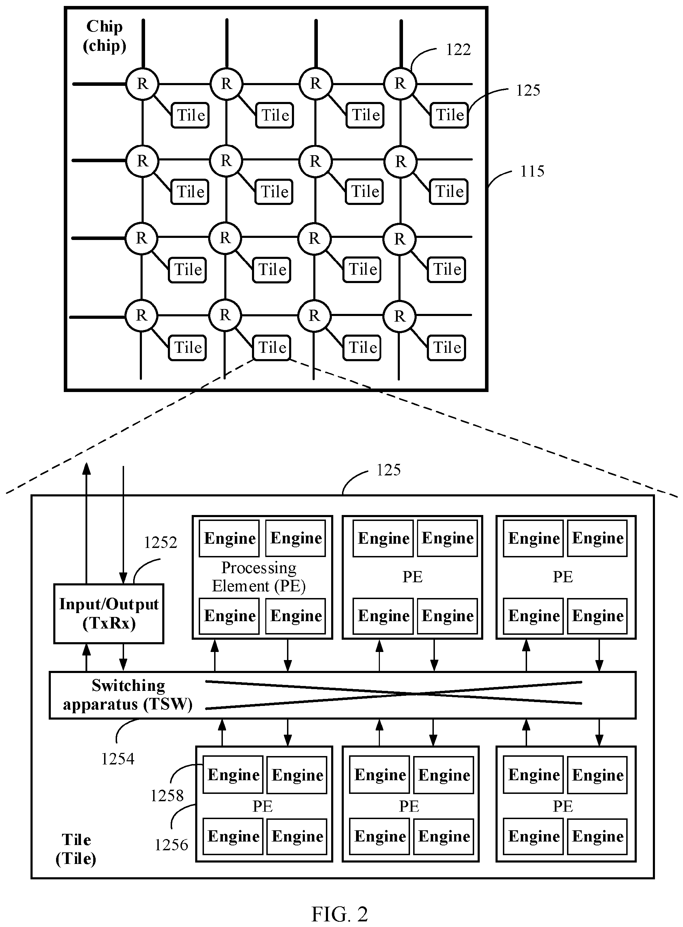

FIG. 2 is a schematic structural diagram of a computing node in a neural network chip according to an embodiment of the present invention. As shown in FIG. 2, a chip 115 includes a plurality of routers 120. Each router may be connected to one tile 125. In actual application, one router 120 may be alternatively connected to a plurality of tiles 125. As shown in FIG. 2, each tile 125 may include an input/output interface (TxRx) 1252, a (TSW) 1254, and a plurality of processing elements (PE) 1256. The TxRx 1252 is configured to: receive data that is input to the tile 125 from the router 120, or output a computing result of the tile 125. In another expression, the TxRx 1252 is configured to implement data transmission between the tile 125 and the router 120. The switching apparatus (TSW) 1254 is connected to the TxRx 1252. The TSW 1254 is configured to implement data transmission between the TxRx 1252 and the plurality of PEs 1256. Each PE 1256 may include one or more computing engines 1258. The one or more computing engines 1258 are configured to implement neural network computing on data input to the PE 1256. For example, a multiply-add operation may be performed on the data input to the tile 125 and a convolution kernel preset in the tile 125. A computing result of the engine 1258 may be sent to another tile 125 by using the TSW 1254 and the TxRx 1252. In actual application, one engine 1258 may include a module for implementing convolution, pooling, or another neural network operation. A specific circuit or function of the engine is not limited herein. For ease of description, the computing engine is referred to as an engine in this embodiment of the present invention.

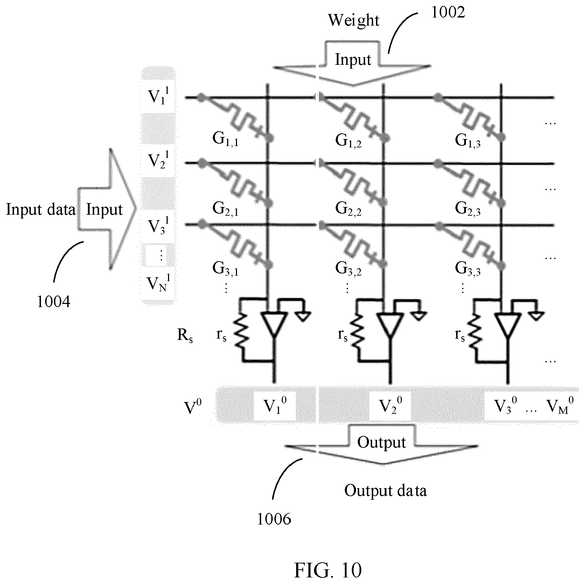

A person skilled in the art may know that, because a novel non-volatile memory such as a resistive random access memory (ReRAM) has an advantage of integrating storage and computing, the non-volatile memory has also been widely applied in a neural network system in recent years. For example, a resistive random access memory crossbar (ReRAM crossbar) including a plurality of memristor units (also known as ReRAM cell) may be configured to perform a matrix multiply-add operation in the neural network system. In this embodiment of the present invention, the engine 1258 may include one or more crossbars. A structure of the ReRAM crossbar may be shown in FIG. 10. How to perform the matrix multiply-add operation by using the ReRAM crossbar is described in the following. It may be learned from the above description of the neural network that the neural network circuit provided in this embodiment of the present invention includes a plurality of NN chips, each NN chip includes a plurality of tiles, each tile includes a plurality of processing elements PEs, each PE includes a plurality of engines, and each engine is implemented by using one or more ReRAM crossbars. It may be learned that the neural network system provided in this embodiment of the present invention may include a plurality of levels of computing nodes. For example, the neural network system may include four levels of computing nodes: a level 1 computing node is a chip 115, a level 2 computing node is a tile in the chip, a level 3 computing node is a PE in the tile, and a level 4 computing node is an engine in the PE.

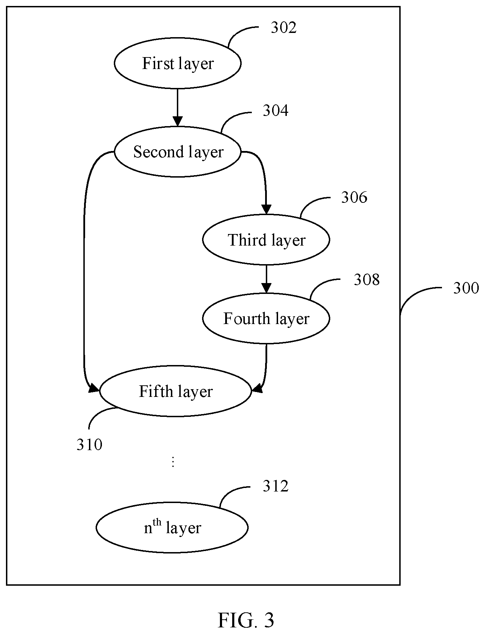

In addition, a person skilled in the art may know that the neural network system may include a plurality of neural network layers. In this embodiment of the present invention, the neural network layer is a concept of a logical layer. One neural network layer indicates that a neural network operation needs to be performed once. Computing of each neural network layer is implemented by a computing node. The neural network layer may include a convolutional layer, a pooling layer, and the like. As shown in FIG. 3, the neural network system may include n neural network layers (which may also be referred to as n layers of a neural network). Herein, n is an integer greater than or equal to 2. FIG. 3 illustrates some neural network layers in a neural network system. As shown in FIG. 3, the neural network system may include a first layer 302, a second layer 304, a third layer 306, a fourth layer 308, and a fifth layer 310 to an $n^{th}$ layer 312. The first layer 302 may perform a convolution operation, the second layer 304 may perform a pooling operation on output data of the first layer 302, the third layer 306 may perform a convolution operation on output data of the second layer 304, the fourth layer 308 may perform a convolution operation on an output result of the third layer 306, the fifth layer 310 may perform a summation operation on the output data of the second layer 304 and output data of the fourth layer 308, and the like. It may be understood that FIG. 3 shows only a simple example and a description of neural network layers in a neural network system, and a specific operation of each neural network layer is not limited. For example, the fourth layer 308 may perform a pooling operation, and the fifth layer 310 may perform another neural network operation such as a convolution operation or a pooling operation.

In an existing neural network system, after computing of an $i^{th}$ layer in the neural network is completed, a computing result of the $i^{th}$ layer is temporarily stored in a preset cache. When computing of an $(i+1)^{th}$ layer is performed, a computing unit needs to newly load the computing result of the $i^{th}$ layer and a weight of the $(i+1)^{th}$ layer from the preset cache to perform computing. The $i^{th}$ layer is any layer in the neural network system. In this embodiment of the present invention, a ReRAM crossbar is applied in the engine of the neural network system, and the ReRAM has an advantage of integrating storage and computing. In addition, a weight may be configured for a ReRAM cell before computing, and a computing result may be directly sent to a next layer for pipeline computing. Therefore, each neural network layer only needs to cache very little data. For example, each neural network layer needs to cache input data enough only for one time of window computing. Further, to implement parallel processing and fast processing on data, an embodiment of the present invention provides a manner of performing stream processing on data by using a neural network. For a clear description, the following briefly describes stream processing in the neural network system with reference to the convolutional neural network system shown in FIG. 1.

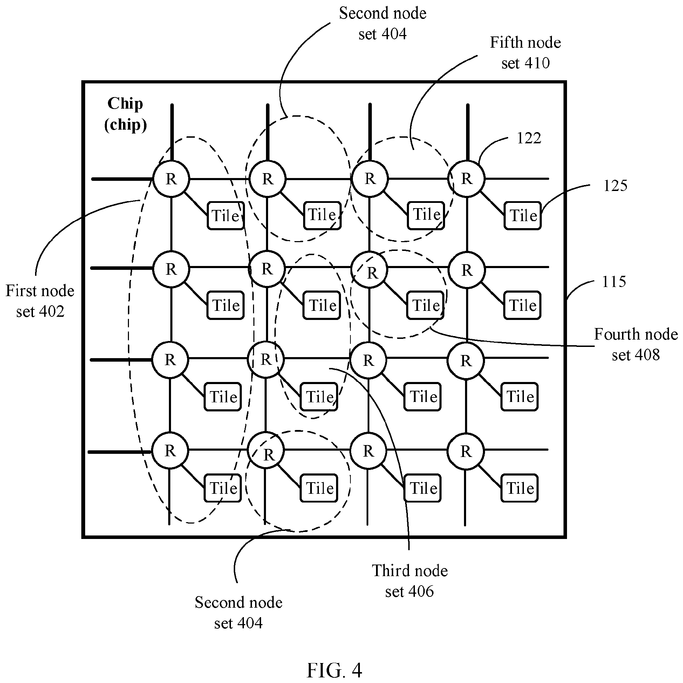

As shown in FIG. 4, to implement fast processing on data, computing nodes in a system may be divided into a plurality of node sets to separately perform computing of different neural network layers. FIG. 4 shows an example of dividing the tiles 125 in the neural network system shown in FIG. 1, to exemplify different computing node sets for implementing the computing of different neural network layers in this embodiment of the present invention. As shown in FIG. 4, the plurality of tiles 125 in the chip 115 may be divided into a plurality of node sets, for example, a first node set 402, a second node set 404, a third node set 406, a fourth node set 408, and a fifth node set 410. Each node set includes at least one computing node (for example, the tile 125). Computing nodes in a same node set are configured to perform a neural network operation on data input a same neural network layer. Data of different neural network layers is processed by computing nodes in different node sets. A processing result obtained after processing performed by one computing node is transmitted to a computing node in another node set for processing. In this pipeline processing manner, each neural network layer needs to cache only very little data, and a plurality of computing nodes can concurrently process a same data stream, thereby improving processing efficiency. It should be noted that FIG. 4 shows an example of the tiles to exemplify the computing node sets used for processing of different neural network layers (for example, a convolutional layer). In actual application, the tile includes a plurality of PEs, each PE includes a plurality of engines, and different computing amounts are required in different scenarios. Therefore, the computing nodes in the neural network system may be divided based on a granularity of a PE, an Engine, or a chip according to an actual application scenario, so that computing nodes in different sets are configured to process operations of different neural network layers. In this manner, the computing node in this embodiment of the present invention may be an Engine, a PE, a tile, or a chip.

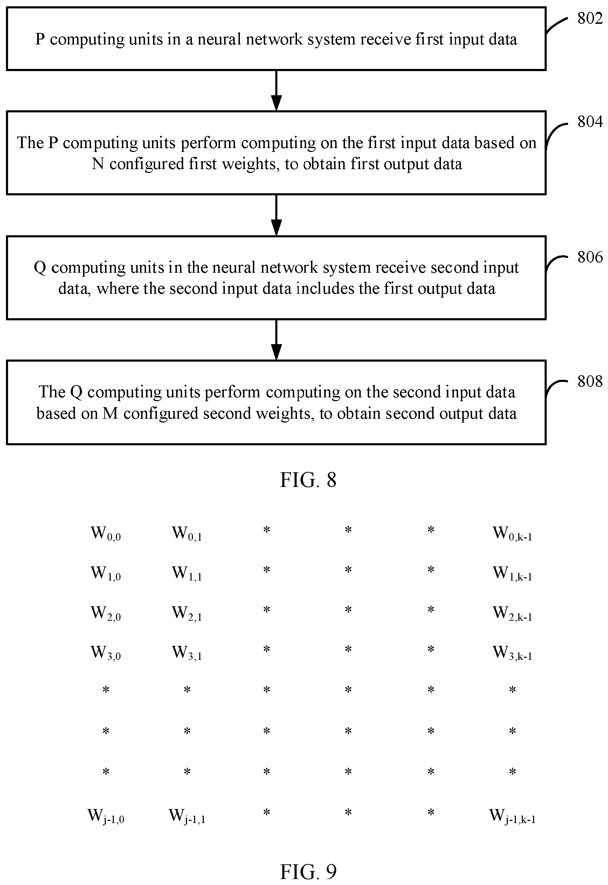

In addition, a person skilled in the art may know that when performing a neural network operation (for example, convolution computing), a computing node (for example, the tile 125) may perform, based on a weight of a corresponding neural network layer, computing on data input to the computing node. For example, a specific tile 125 may perform, based on a weight of a corresponding convolutional layer, a convolution operation on input data input to the tile 125, for example, perform matrix multiply-add computing on the weight and the input data. The weight is usually used to indicate importance of input data to output data. In a neural network, the weight is usually presented by using a matrix. As shown in FIG. 9, a weight matrix with j rows and k columns shown in FIG. 9 may be a weight of a neural network layer, and each element in the weight matrix represents a weight value. In this embodiment of the present invention, because a computing node in a node set is configured to perform an operation of a neural network layer, computing nodes in a same node set may share a weight, and computing nodes in different node sets may have different weights. In this embodiment of the present invention, a weight in each computing node may be preconfigured. Specifically, each element in a weight matrix is configured for a ReRAM cell in a corresponding crossbar array, so that a matrix multiply-add operation can be performed on input data and the configured weight by using the crossbar array. The following briefly describes how to implement a matrix multiply-add operation by using a crossbar.

It may be learned from the foregoing description that, in this embodiment of the present invention, in a process of implementing stream processing in the neural network, the computing nodes in the neural network may be divided into node sets used for processing of different neural network layers, and be configured with corresponding weights. Therefore, the computing nodes in different node sets can perform corresponding computing based on the configured weights. In addition, a computing node in each node set can send a computing result to a computing node configured to perform an operation of a next neural network layer. A person skilled in the art may know that, in the process of implementing the stream processing in the neural network, if computing resources for performing operations of different neural network layers do not match, for example, few computing resources are used for performing an operation of an upper neural network layer but relatively more computing resources are used for performing an operation of a current neural network layer, computing resources of a current-layer computing node are wasted. To fully use a computing capability of a computing node and make computing capabilities of computing nodes for performed operations of different neural network layers match, an embodiment of the present invention provides a computing resource allocation method, to allocate computing nodes for performing the operations of different neural network layers, so that computing capabilities of computing nodes for performing operations of two adjacent neural network layers match, thereby improving data processing efficiency in the neural network system and avoiding waste of the computing resources.

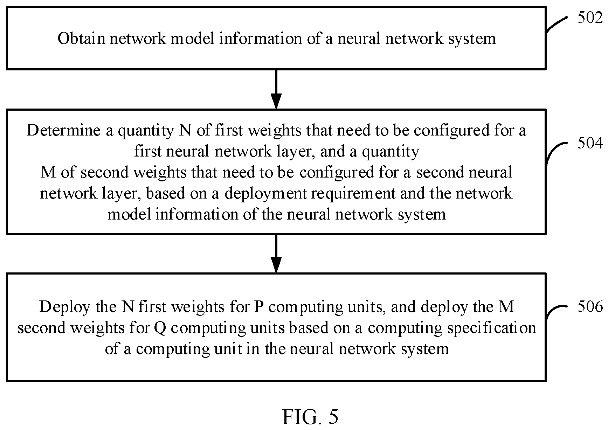

FIG. 5 is a flowchart of a computing resource allocation method in a neural network system according to an embodiment of the present invention. The method may be applied to the neural network system shown in FIG. 1. The method may be implemented by the host 105 when a neural network is deployed or when a neural network system is configured. Specifically, the method may be implemented by the processor 1052 in the host 105. As shown in FIG. 5, the method may include the following steps.

In step 502, network model information of a neural network system is obtained. The network model information includes a first output data volume of a first neural network layer and a second output data volume of a second neural network layer in the neural network system. The network model information may be determined based on an actual application requirement. For example, a total layer quantity of neural network layers and an algorithm of each layer may be determined according to an application scenario of the neural network system. The network model information may include the total layer quantity of the neural network layers in the neural network system, the algorithm of each layer, and a data output volume of each neural network layer. In this embodiment of the present invention, the algorithm means a neural network operation that needs to be performed. For example, the algorithm may mean a convolution operation, a pooling operation, and the like. As shown in FIG. 3, the neural network system in this embodiment of the present invention may have n neural network layers, where n is an integer not less than 2. In this step, the first neural network layer and the second neural network layer may be two layers with an operation dependence relationship in the n layers. In this embodiment of the present invention, two neural network layers with a dependence relationship means that input data of one neural network layer includes output data of the other neural network layer. The two neural network layers with the dependence relationship may also be referred to as adjacent layers. For example, as shown in FIG. 3, the output data of the first layer 302 is input data of the second layer 304, and therefore, a dependence relationship exists between the first layer 302 and the second layer 304. The output data of the second layer 304 is input data of the third layer 306, and the input data of the fifth layer 310 includes the output data of the second layer 304. Therefore, a dependence relationship exists between the second layer 304 and the third layer 306, and a dependence relationship exists between the second layer 304 and the fifth layer 310. For a clear description, in this embodiment of the present invention, an example in which the first layer 302 shown in FIG. 3 is the first neural network layer and the second layer 304 is the second neural network layer is used for description.

In step 504, N first weights that need to be configured for the first neural network layer and M second weights that need to be configured for the second neural network layer are determined based on a deployment requirement of the neural network system, the first output data volume, and the second output data volume. Herein, N and M are both positive integers, and a ratio of N to M corresponds to a ratio of the first output data volume to the second output data volume. In actual application, the deployment requirement may include a computing delay of the neural network system, or may include a quantity of chips that need to be deployed in the neural network system. A person skilled in the art may know that the neural network operation is mainly a matrix multiply-add operation, and output data of each neural network layer is a one-dimensional or multi-dimensional real number matrix. Therefore, the first output data volume includes a row quantity and a column quantity of the output data of the first neural network layer, and the second output data volume includes a row quantity and a column quantity of the output data of the second neural network layer.

As described above, when performing the neural network operation, for example, performing a convolution operation or a pooling operation, the computing node needs to perform multiply-add computing on input data and a weight of a corresponding neural network layer. Because a weight is configured on a cell in a crossbar, and crossbars in a computing unit perform computing on input data in parallel, a quantity of weights may be used for determining a parallel computing capability of a plurality of computing units for performing the neural network operation. In other words, a computing capability of a computing node for performing the neural network operation is determined based on a quantity of weights configured for a computing unit for performing the neural network operation. In this embodiment of the present invention, to make computing capabilities of two adjacent neural network layers for performing operations in the neural network system match, the quantity of weights that need to be configured for the first neural network layer and the quantity of weights that needs to be configured for the second neural network layer may be determined based on the specific deployment requirement, the first output data volume, and the second output data volume. Because weights of different neural network layers are not necessarily the same, for a clear description, in this embodiment of the present invention, a weight required for an operation of the first neural network layer is referred to as a first weight, and a weight required for an operation of the second neural network layer is referred to as a second weight. Performing the operation of the first neural network layer means that the computing node performs, based on the first weight, corresponding computing on data input to the first neural network layer, and performing the operation of the second neural network layer means that the computing node performs, based on the second weight, corresponding computing on data input to the second neural network layer. The computing herein may be performing the neural network operation such as a convolution operation or a pooling operation.

The following describes in detail how to determine a quantity of weights that need to be configured for each neural network layer according to different deployment requirements in this step. The quantity of weights that need to be configured for each neural network layer includes a quantity N of first weights that need to be configured for the first neural network layer and a quantity M of second weights that need to be configured for the second neural network layer. In this embodiment of the present invention, the weight indicates a weight matrix. The quantity of weights is a quantity of required weight matrices i.e. a quantity of weight replicas. The quantity of weights are also understood as a quantity of same weight matrices that need to be configured.

In a case, when the deployment requirement of the neural network system is a computing delay of the neural network system, in order that computing of the entire neural network system does not exceed the specified computing delay, the quantity of weights that need to be configured for the first neural network layer may be first determined based on the data output volume of the first neural network layer (that is, the beginning layer of all neural network layers in the neural network system), the computing delay, and a computing frequency of a ReRAM crossbar used in the neural network system; and then, the quantity of weights that need to be configured for each neural network layer may be obtained based on an output data volume of each neural network layer and the quantity of weights that need to be configured for the first neural network layer. Specifically, the quantity of weights that need to be configured for the first neural network layer (that is, the beginning layer) may be obtained according to the following Formula (1):

$$n^1_{replicas} = \left\lceil \frac{FM^1_{out}.x \ * \ FM^1_{out}.y}{t * f} \right\rceil$$

(Formula 1)

Herein, $n^1_{replicas}$ is used to indicate the quantity of weights that need to be configured for the first neural network layer (that is, the beginning layer), $FM^1_{out}.x$ is the row quantity of the output data of the first neural network layer (that is, the beginning layer), $FM^1_{out}.y$ is the column quantity of the output data of the first neural network layer (that is, the beginning layer), t is the specified computing delay, f is the computing frequency of the crossbar in the computing unit. A person skilled in the art may learn that a value of f may be obtained based on a configuration parameter of the used crossbar. The data volume of the output data of the first neural network layer is obtained based on the network model information obtained in step 502. It may be understood that, when the first neural network layer is the beginning layer of all the neural network layers in the neural network system, the quantity N of first weights is a value of $n^1_{replicas}$ calculated according to Formula 1.

In this embodiment of the present invention, after the quantity of weights required for the beginning neural network layer is obtained, a ratio of quantities of weights required for two adjacent layers may correspond to a ratio of output data volumes of the two adjacent layers, to improve data processing efficiency in the neural network system, avoid a bottleneck or data waiting in a parallel pipeline processing manner, and make processing rates of the two adjacent neural network layers match. For example, the two ratios may be the same. Therefore, in this embodiment of the present invention, the quantity of weights required for each neural network layer may be determined based on the quantity of weights required for the beginning neural network layer and a ratio of output data volumes of two adjacent neural network layers. Specifically, the quantity of weights required for each neural network layer may be calculated according to the following Formula (2).

$$\frac{n^{i-1}_{replicas}}{n^i_{replicas}} = \left\lceil \frac{FM^{i-1}_{out}.x * FM^{i-1}_{out}.y}{FM^i_{out}.x * FM^i_{out}.y} \right\rceil$$

(Formula 2).

Herein, $n^i_{replicas}$ is used to indicate a quantity of weights required for an $i^{th}$ layer, $n^{i-1}_{replicas}$ is used to indicate a quantity of weights required for an $(i-1)^{th}$ layer, $FM^i_{out}.x$ is used to indicate a row quantity of output data of the $i^{th}$ layer, $FM^i_{out}.y$ is used to indicate a column quantity of the output data of the $i^{th}$ layer, $FM^{i-1}_{out}.x$ is used to indicate a row quantity of output data of the $(i-1)^{th}$ layer, $FM^{i-1}_{out}.y$ is used to indicate a column quantity of the output data of the $(i-1)^{th}$ layer, a value of i may be from 2 to n, and n is a total layer quantity of the neural network layers in the neural network system. In another expression, in this embodiment of the present invention, a ratio of the quantity of weights required for an operation of the $(i-1)^{th}$ neural network layer to the quantity of weights required for an operation of the $i^{th}$ neural network layer corresponds to a ratio of the output data volume of the $(i-1)^{th}$ layer to the output data volume of the $i^{th}$ layer.

A person skilled in the art may learn that the output data of each neural network layer may include a plurality of channels. Herein, the channel indicates a quantity of kernels at each neural network layer. One kernel represents a feature extraction manner, and corresponds to one feature map. A plurality of feature maps form the output data of this layer. A weight used for one neural network layer includes a plurality of kernels. Therefore, in actual application, in another case, a quantity of channels of each neural network layer may be considered for calculation of the output data volume of each layer. Specifically, after the quantity of weights required for the first neural network layer is obtained according to the foregoing Formula 1, the quantity of weights required for each neural network layer may be obtained according to the following Formula 3.

$$\frac{n^{i-1}_{replicas}}{n^{i}_{replicas}} = \left\lceil \frac{FM^{i-1}_{out}.x \;*\; FM^{i-1}_{out}.y \;*\; C_{i-1}}{FM^{i}_{out}.x \;*\; FM^{i}_{out}.y \;*\; C_{i}} \right\rceil$$

(Formula 3)

A difference between Formula 3 and Formula 2 is that a quantity of channels output by each neural network layer is further considered in Formula 3 based on Formula 2. Herein, $C_{i-1}$ is used to represent a quantity of channels of the $(i-1)^{th}$ layer, $C_i$ is used to represent a quantity of channels of the $i^{th}$ layer, a value of i is from 2 to n, n is the total layer quantity of the neural network layers in the neural network system, and n is an integer not less than 2. The quantity of channels of each neural network layer may be obtained from the network model information.

In this embodiment of the present invention, after the quantity of weights required for the beginning layer is obtained according to the foregoing Formula 1, the quantity of weights required for each neural network layer may be calculated based on Formula 2 (or Formula 3) and the output data volume that is of each neural network layer and that is included in the network model information. For example, when the first neural network layer is the beginning layer of all the neural network layers in the neural network system, after the quantity N of first weights is obtained according to Formula 1, the quantity M of second weights required for the second neural network layer may be obtained according to Formula 2 based on the value of N, the specified first output data volume, and the specified second output data volume. In another expression, after the value of N is obtained, the value of M may be calculated according to the following formula: N/M = the first output data volume/the second output data volume.

In another case, when the deployment requirement is a quantity of chips required for the neural network system, the quantity of weights required for the first neural network layer may be calculated with reference to the foregoing Formula 2 and the following Formula 4, or the quantity of weights required for the first neural network layer may be calculated with reference to the foregoing Formula 3 and the following Formula 4.

$$xb_1 * n^1_{replicas} + xb_2 * n^2_{replicas} + \cdots + xb_n * n^n_{replicas} \leq K * L$$

(Formula 4)

In the foregoing Formula 4, $xb_1$ is used to indicate a quantity of crossbars that are required for deploying a weight of the first neural network layer (or referred to as the beginning layer), $n^1_{replicas}$ is used to indicate the quantity of weights required for the beginning layer, $xb_2$ is used to indicate a quantity of crossbars that are required for deploying a weight of the second neural network layer, $n^2_{replicas}$ is used to indicate a quantity of weights required for the second neural network layer, $xb_n$ is used to indicate a quantity of crossbars that are required for deploying a weight of an $n^{th}$ neural network layer, $n^n_{replicas}$ is used to indicate a quantity of weights required for the $n^{th}$ neural network layer, K is a quantity of chips that are required in the deployment requirement for the neural network system, and L is a quantity of crossbars in each chip. A sum of quantities of crossbars of the neural network layers in Formula 4 is less than or equal to a specified total quantity of crossbars included in the chip in the neural network. For descriptions of Formula 2 and Formula 3, refer to the foregoing descriptions. Details are not described herein again.

A person skilled in the art may know that after a model of the neural network system is determined, a weight of each neural network layer in the neural network system and a specification of a crossbar (that is, a row quantity and a column quantity of ReRAM cells in the crossbar) used in the neural network system are determined. In another expression, the network model information of the neural network system further includes a size of the weight used for each neural network layer and specification information of the crossbar. Therefore, in this embodiment of the present invention, $xb_i$ of the $i^{th}$ neural network layer may be obtained based on the size of the weight (that is, a row quantity and a column quantity of the weight matrix) of each layer and the specification of the crossbar, where a value of i is from 2 to n. A value of L may be obtained based on a parameter of a chip used in the neural network system. In this embodiment of the present invention, in a case, after the quantity (that is, $n_{replicas}^1$) of weights required for the beginning neural network layer is obtained according to the foregoing Formula 2 and Formula 4, the quantity of weights that need to be configured for each layer may be obtained based on Formula 2 and the output data volume that is of each layer and that is obtained from the network model information. In another case, after the quantity (that is, $n_{replicas}^1$) of weights required for the beginning neural network layer is obtained according to the foregoing Formula 3 and Formula 4, the quantity of weights that need to be configured for each layer may be obtained based on Formula 3 and the output data volume of each layer.

In step 506, the N first weights are deployed for P computing units, and the M second weights are deployed for Q computing units based on a computing specification of a computing unit in the neural network system. Herein, P and Q are both positive integers, the P computing units are configured to perform the operation of the first neural network layer, and the Q computing units are configured to perform the operation of the second neural network layer. In this embodiment of the present invention, the computing specification of the computing unit indicates a quantity of crossbars included in the computing unit. In actual application, one computing unit may include one or more crossbars. Specifically, as described above, because the network model information of the neural network system further includes the size of the weight used for each neural network layer and the specification information of the crossbar, a deployment relationship between a weight and a crossbar may be obtained. After the quantity of weights that need to be configured for each neural network layer is obtained in step 504, the weight of each layer may be deployed for a corresponding quantity of computing units based on a quantity of crossbars included in each computing unit. Specifically, an element in a weight matrix is deployed for a ReRAM cell in a computing unit. In this embodiment of the present invention, the computing unit may be a PE or an engine. One PE may include a plurality of engines, and one engine may include one or more crossbars. Because each layer may have different sizes of weights, one weight may be deployed for one or more engines.

Specifically, in this step, the P computing units for which the N first weights need to be deployed and the Q computing units for which the M second weights need to be deployed may be determined based on the deployment relationship between a weight and a crossbar and the quantity of crossbars included in the computing unit. For example, the N first weights of the first neural network layer may be deployed for the P computing units, and the M second weights may be deployed for the Q computing units. Specifically, an element in the N first weights is deployed for a ReRAM cell corresponding to a crossbar in the P computing units, and an element in the M second weights is deployed for a ReRAM cell corresponding to a crossbar in the Q computing units. Therefore, the P computing units may perform, based on the N configured first weights, the operation of the first neural network layer on input data input to the P computing units, and the Q computing units may perform, based on the M configured second weights, the operation of the second neural network layer on input data input to the Q computing units.

It may be learned from the foregoing embodiment that, in the resource allocation method provided in this embodiment of the present invention, when a computing unit for performing an operation of each neural network layer is configured, a data volume output by an adjacent neural network layer is considered, so that computing capabilities of computing nodes for performing operations of different neural network layers match, thereby fully using computing capabilities of the computing nodes and improving data processing efficiency.

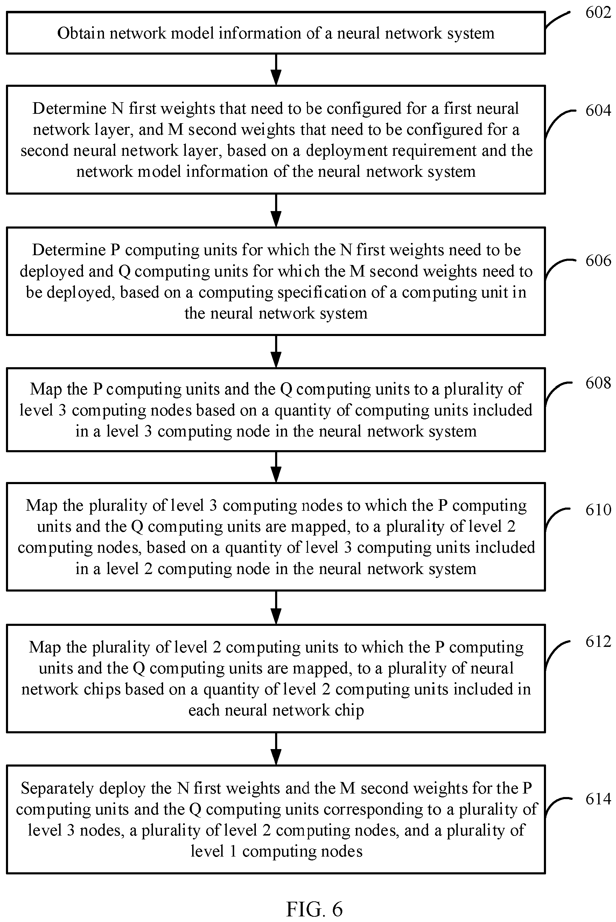

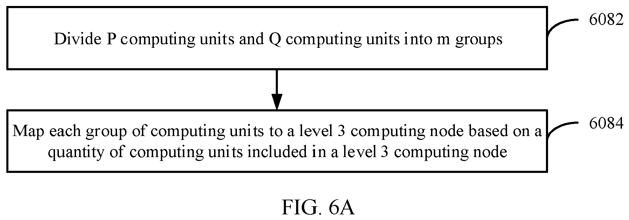

Further, in this embodiment of the present invention, to further reduce a data transmission volume between the computing units of different neural network layers and save transmission bandwidth between computing units or computing nodes, the computing unit may be mapped to an upper-level computing node of the computing unit by using the following method. As described above, the neural network system may include four levels of computing nodes: a level 1 computing node: a chip, a level 2 computing node: a tile, a level 3 computing node: a PE, and a level 4 computing node: an engine. FIG. 6 uses an example in which the level 4 computing node: an engine is used as a computing unit, to describe in detail how to map, to upper-level computing nodes, the P computing units for which the N first weights need to be deployed and the Q computing units for which the M second weights need to be deployed. The method may still be implemented by the host 105 in the neural network system shown in FIG. 1 and FIG. 1A. As shown in FIG. 6, the method may include the following steps.

In step 602, network model information of a neural network system is obtained. The network model information includes a first output data volume of a first neural network layer and a second output data volume of a second neural network layer in the neural network system. In step 604, N first weights that need to be configured for the first neural network layer and M second weights that need to be configured for the second neural network layer are determined based on a deployment requirement of the neural network system, the first output data volume, and the second output data volume. In step 606, P computing units for which the N first weights need to be deployed and Q computing units for which the M second weights need to be deployed are determined based on a computing specification of a computing unit in the neural network system. For steps 602, 604, and 606 in this embodiment of the present invention, refer to related descriptions of the foregoing steps 502, 504, and 506. A difference between step 606 and step 506 is that, in step 606, after the P computing units for which the N first weights need to be deployed and the Q computing units for which the M second weights need to be deployed are determined, the N first weights are not directly deployed for the P computing units, nor the M second weights are not directly deployed for the Q computing units. Instead, step 608 is performed.

In step 608, the P computing units and the Q computing units are mapped to a plurality of level 3 computing nodes based on a quantity of computing units included in a level 3 computing node in the neural network system. Specifically, FIG. 6A is a flowchart of a resource mapping method according to an embodiment of the present invention. FIG. 6A uses an example in which the computing unit is a level 4 computing node: an engine, to describe how to map an engine to a level 3 computing node: a PE. As shown in FIG. 6A, the method may include the following steps.

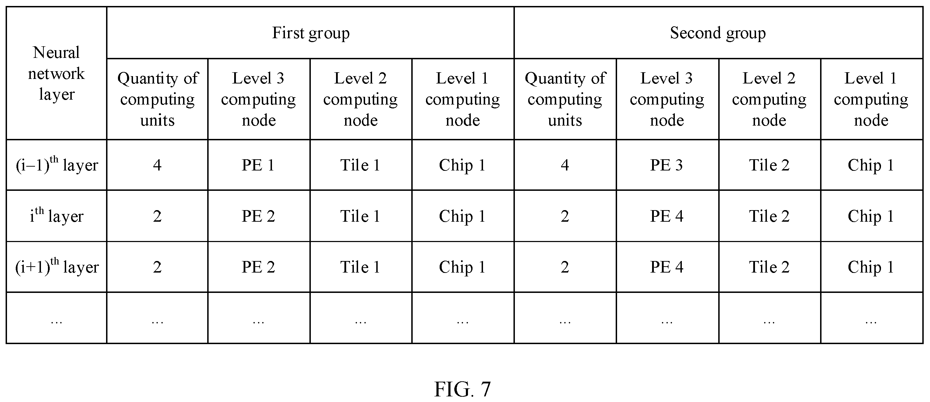

In step 6082, the P computing units and the Q computing units are divided into m groups. Each group includes P/m computing units for execution at the first neural network layer and Q/m computing units for execution at the second neural network layer. Herein, m is an integer not less than 2, and values of P/m and Q/m are both integers. Specifically, for example, the P computing units are computing units for execution at an $(i-1)^{th}$ layer, and the Q computing units are computing units for execution at an $i^{th}$ layer. As shown in FIG. 7, for example, eight (that is, P=8) computing units need to be allocated to the $(i-1)^{th}$ layer, four (that is, Q=4) computing units need to be allocated to an $i^{th}$ layer, four computing units need to be allocated to an $(i+1)^{th}$ layer, and these computing units are divided into two (that is, m=2) groups. In this way, two groups shown in FIG. 7 may be obtained. A first group includes four computing units of the $(i-1)^{th}$ layer, two computing units of the $i^{th}$ layer, and two computing units of an $(i+1)^{th}$ layer. Similarly, a second group includes four computing units of the $(i-1)^{th}$ layer, two computing units of the $i^{th}$ layer, and two computing units of the $(i+1)^{th}$ layer.

In step 6084, each group of computing units are separately mapped to a level 3 computing node based on a quantity of computing units included in a level 3 computing node. In a mapping process, computing units for performing operations of adjacent neural network layers are mapped, as much as possible, to a same level 3 node. As shown in FIG. 7, it is assumed that in the neural network system, each level 1 computing node: a chip includes eight level 2 computing nodes: tiles, each tile includes two level 3 computing nodes: PEs, and each PE includes four engines. For the first group, the four engines at the $(i-1)^{th}$ layer may be mapped to a level 3 computing node: a PE (for example, a PE 1 in FIG. 7), and the two engines at the $i^{th}$ layer and the two engines at the $(i+1)^{th}$ layer may be mapped together to a level 3 computing node: a PE (for example, a PE 2 in FIG. 7). Similarly, in a mapping manner of the computing units in the first group, for the computing units in the second group, the four engines at the $(i-1)^{th}$ layer may be mapped to a PE 3, and the two engines at the $i^{th}$ layer and the two engines at the $(i+1)^{th}$ layer are mapped together to a PE 4. In actual application, after mapping of the computing units in the first group is completed, mapping of computing units in another group may be performed in a same manner according to a mapping manner of the first group.

In this mapping manner, computing units for execution at adjacent neural network layers (for example, the $i^{th}$ layer and the $(i+1)^{th}$ layer in FIG. 7) may be mapped to a same level 3 computing node as much as possible. Therefore, when output data of the $i^{th}$ layer is sent to a computing unit at the $(i+1)^{th}$ layer, transmission is performed only in the same level 3 node (the PE), and bandwidth between level 3 nodes does not need to be occupied, thereby improving a data transmission rate and reducing transmission bandwidth consumption between nodes.

Back to FIG. 6, in step 610, the plurality of level 3 computing nodes to which the P computing units and the Q computing units are mapped are mapped to a plurality of level 2 computing nodes based on a quantity of level 3 computing units included in a level 2 computing node in the neural network system. In step 612, the plurality of level 2 computing units to which the P computing units and the Q computing units are mapped are mapped to a plurality of neural network chips based on a quantity of level 2 computing units included in each neural network chip. As described above, FIG. 6A is described by using an example in which an engine for performing the operation of the $i^{th}$ layer is mapped to a level 3 computing node. Similarly, according to the method shown in FIG. 6A, a level 3 node may be further mapped to a level 2 node, and a level 2 node may be mapped to a level 1 node. For example, as shown in FIG. 7, for the first group, the PE 1 for performing the operation of the $(i-1)^{th}$ layer and the PE 2 for performing the operations of the $i^{th}$ layer and the $(i+1)^{th}$ layer both may be further mapped to a same level 2 computing node: a tile 1. For the second group, the PE 3 for performing the operation of the $(i-1)^{th}$ layer and the PE 4 for performing the operations of the $i^{th}$ layer and the $(i+1)^{th}$ layer both may be further mapped to a same level 2 computing node: a tile 2. Further, the tile 1 and the tile 2 for performing the operations of the $(i-1)^{th}$ layer, the $i^{th}$ layer, and the $(i+1)^{th}$ layer may be both mapped to a same chip: a chip 1. In this manner, a mapping relationship from a level 1 computing node: a chip, to a level 4 computing node: an engine, in the neural network system may be obtained.

In step 614, the N first weights and the M second weights are separately deployed for the P computing units and the Q computing units corresponding to the plurality of level 3 nodes, the plurality of level 2 computing nodes, and the plurality of level 1 computing nodes. In this embodiment of the present invention, a mapping relationship from the level 1 computing node: a chip, to the level 4 computing node: an engine, in the neural network system may be obtained by using the method shown in FIG. 6A and FIG. 7. For example, a mapping relationship between each of the P computing units and the Q computing units, and each of the plurality of level 3 nodes, the plurality of level 2 computing nodes, and the plurality of level 1 computing nodes may be obtained. Further, in this step, weights of corresponding neural network layers may be separately deployed for computing units of computing nodes at all levels according to the obtained mapping relationship. For example, as shown in FIG. 7, N weights of the $(i-1)^{th}$ layer may be separately deployed for the four computing units corresponding to the chip 1, the tile 1, and the PE 1 and the four computing units corresponding to the chip 1, the tile 2, and the PE 3; and M second weights of the $i^{th}$ layer are separately deployed for the two computing units corresponding to the chip 1, the tile 1, and the PE 2 and the two computing units corresponding to the chip 1, the tile 2, and the PE 4. In another expression, the N weights of the $(i-1)^{th}$ layer are separately deployed for the four computing units (engine) in the chip 1->the tile 1->the PE 1 and the four computing units in the chip 1->the tile 2->the PE 3; and the M weights of the $i^{th}$ layer are separately deployed for the two computing units in the chip 1->the tile 1->the PE 2 and the two computing units in the chip 1->the tile 2->the PE 4.

In this deployment manner, not only computing capabilities of computing units that support operations of adjacent neural network layers in the neural network system described in this embodiment of the present invention can match, but also the computing units for performing the operations of the adjacent neural network layers can be located in a same level 3 computing node as many as possible. In addition, level 3 computing nodes for performing the operations of the adjacent neural network layers are located in a same level 2 computing node as many as possible, and level 2 computing nodes for performing the operations of the adjacent neural network layers are located in a same level 1 computing node as many as possible, thereby reducing a data volume transmitted between computing nodes and improving a rate of data transmission between different neural network layers.

It should be noted that, in this embodiment of the present invention, in a network neural system including four levels of computing nodes, a case in which a level 4 computing node: an engine is used as a computing unit is used to describe a process of allocating computing resources used for performing operations of different neural network layers. In another expression, in the foregoing embodiment, an engine is used as a division granularity of sets for performing the operations of different neural network layers. In actual application, allocation may be alternatively performed by using the level 3 computing node: a PE as a computing unit. In this case, mapping between the level 3 computing node: a PE, the level 2 computing node: a tile, and the level 1 computing node: a chip may be established by using the foregoing method. Certainly, when a very large data volume needs to be computed, the allocation may also be performed by using the level 2 computing node: a tile as a granularity. In another expression, in this embodiment of the present invention, the computing unit may be an engine, a PE, a tile, or a chip. This is not limited herein.

The foregoing describes in detail how to configure computing resources in the neural network system provided in the embodiments of the present invention. The following further describes the neural network system from a perspective of data processing. FIG. 8 is a flowchart of a data processing method according to an embodiment of the present invention. The method is applied to the neural network system shown in FIG. 1. The neural network system shown in FIG. 1 is configured by using the methods shown in FIG. 5 to FIG. 7 to allocate computing resources used for performing operations of different neural network layers. As shown in FIG. 8, the method may be implemented by the neural network circuit shown in FIG. 1. The method may include the following steps.

In step 802, P computing units in the neural network system receive first input data. The P computing units are configured to perform an operation of a first neural network layer in the neural network system. In this embodiment of the present invention, the first neural network layer is any layer in the neural network system. The first input data is data on which the operation of the first neural network layer needs to be performed. When the first neural network layer is the first layer 302 in the neural network system shown in FIG. 3, the first input data may be data first input to the neural network system. When the first neural network layer is not the first layer in the neural network system, the first input data may be output data obtained after processing performed at another neural network layer.

In step 804, the P computing units perform computing on the first input data based on N configured first weights, to obtain first output data. In this embodiment of the present invention, the first weight is a weight matrix. The N first weights indicate N weight matrices, and the N first weights are referred to as N first weight replicas. The N first weights may be configured for the P computing units by using the methods shown in FIG. 5 to FIG. 7. Specifically, each element in the first weight is configured for a ReRAM cell of a crossbar included in the P computing units, so that crossbars in the P computing units can perform parallel computing on the input data based on the N first weights, thereby fully using computing capabilities of the crossbars in the P computing units. In this embodiment of the present invention, after receiving the first input data, the P computing units may perform a neural network operation on the received first input data based on the N configured first weights, to obtain the first output data. For example, the crossbar in the P computing units may perform a matrix multiply-add operation on the first input data and the configured first weight.

In step 806, Q computing units in the neural network system receive second input data. The Q computing units are configured to perform an operation of a second neural network layer in the neural network system. The second input data includes the first output data. Specifically, in a case, the Q computing units may perform the operation of the second neural network layer only on the first output data of the P computing units. For example, the P computing units are configured to perform the operation of the first layer 302 shown in FIG. 3, and the Q computing units are configured to perform the operation of the second layer 304 shown in FIG. 3. In this case, the second input data is the first output data. In another case, the Q computing units may be further configured to jointly perform the operation of the second neural network layer on the first output data of the first neural network layer and output data of another neural network layer. For example, the P computing units may be configured to perform the neural network operation of the second layer 304 shown in FIG. 3, and the Q computing units may be configured to perform the neural network operation of the fifth layer 310 shown in FIG. 3. In this case, the Q computing units are configured to perform an operation on output data of the second layer 304 and the fourth layer 308, and the second input data includes the first output data and output data of the fourth layer 308.

In step 808, the Q computing units perform computing on the second input data based on M configured second weights, to obtain second output data. In this embodiment of the present invention, the second weight is also a weight matrix. The M second weights indicate M weight matrices, and the M second weights are also referred to as M second weight replicas. Similar to step 804, according to the method shown in FIG. 5, the second weight may be configured for a ReRAM cell of a crossbar included in the Q computing units. After receiving the second input data, the Q computing units may perform a neural network operation on the received second input data based on the M configured second weights, to obtain the second output data. For example, the crossbar in the Q computing units may perform a matrix multiply-add operation on the second input data and the configured second weight. It should be noted that, in this embodiment of the present invention, a ratio of N to M corresponds to a ratio of a data volume of the first output data to a data volume of the second output data.

For a clear description, the following briefly describes how the ReRAM crossbar implements a matrix multiply-add operation. As shown in FIG. 9, a weight matrix with j rows and k columns shown in FIG. 9 may be a weight of a neural network layer, and each element in the weight matrix represents a weight value. FIG. 10 is a schematic structural diagram of a ReRAM crossbar in a computing unit according to an embodiment of the present invention. For ease of description, the ReRAM crossbar may be referred to as a crossbar in this embodiment of the present invention. As shown in FIG. 10, the crossbar includes a plurality of ReRAM cells such as $G_{1,1}$ and $G_{2,1}$. The plurality of ReRAM cells form a neural network matrix. In this embodiment of the present invention, in a process of configuring a neural network, the weight shown in FIG. 9 may be input to the crossbar from a bit line (an input port 1002 shown in FIG. 10) of the crossbar shown in FIG. 10, so that each element in the weight is configured for a corresponding ReRAM cell. For example, a weight element $W_{0,0}$ in FIG. 9 is configured for $G_{1,1}$ in FIG. 10, and a weight element $W_{1,0}$ in FIG. 9 is configured in $G_{2,1}$ in FIG. 10. Each weight element corresponds to one ReRAM cell. When performing neural network computing, input data is input to the crossbar by using a word line of the crossbar (an input port 1004 shown in FIG. 10). It may be understood that the input data may be represented by using a voltage, to implement a point multiplication operation on the input data and a weight value configured in the ReRAM cell. An obtained computing result is output from an output end (an output port 1006 shown in FIG. 10) of each column of the crossbar in a form of an output voltage.

As described above, because a data volume output by an adjacent neural network layer is considered when a computing unit for performing an operation of each neural network layer is configured in the neural network system, computing capabilities of computing nodes for performing operations of different neural network layers match. Therefore, in the data processing method according to this embodiment of the present invention, the computing capability of the computing unit can be fully used, thereby improving data processing efficiency of the neural network system.

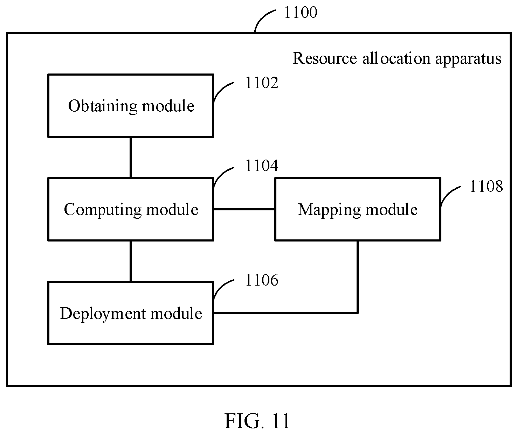

In another case, an embodiment of the present invention provides a resource allocation apparatus. The apparatus may be applied to the neural network systems shown in FIG. 1 and FIG. 1A, and is configured to allocate computing nodes for performing operations of different neural network layers, so that computing capabilities of computing nodes for performing operations of two adjacent neural network layers in the neural network system match, thereby improving data processing efficiency in the neural network system without wasting computing resources. It may be understood that the resource allocation apparatus may be located in a host, and may be implemented by a processor in the host; or may be used as a physical component, and exist separately from a processor. For example, the apparatus may be used as a compiler independent of a processor. As shown in FIG. 11, a resource allocation apparatus 1100 may include: an obtaining module 1102, a computing module 1104, and a deployment module 1106.

The obtaining module 1102 is configured to obtain a data volume of first output data of a first neural network layer and a data volume of second output data of a second neural network layer in a neural network system. Input data of the second neural network layer includes the first output data. The computing module 1104 is configured to determine, based on a deployment requirement of the neural network system, N first weights that need to be configured for the first neural network layer and M second weights that need to be configured for the second neural network layer. Herein, N and M are both positive integers, and a ratio of N to M corresponds to a ratio of the data volume of the first output data to the data volume of the second output data.

As described above, the neural network system in this embodiment of the present invention includes a plurality of neural network chips, each neural network chip includes a plurality of computing units, and each computing unit includes at least one resistive random access memory crossbar ReRAM crossbar. In a case, the deployment requirement includes a computing delay. When the first neural network layer is a beginning layer of all neural network layers in the neural network system, the computing module is configured to: determine a value of N based on the data volume of the first output data, the computing delay, and a computing frequency of a resistive random access memory crossbar ReRAM crossbar in the computing unit; and determine a value of M based on the value of N and the ratio of the data volume of the first output data to the data volume of the second output data.

In another case, the deployment requirement includes a quantity of chips in the neural network system. The first neural network layer is a beginning layer in the neural network system. The computing module is configured to: determine the value of N based on the quantity of chips, a quantity of ReRAM crossbars in each chip, a quantity of ReRAM crossbars that are required for deploying a weight of each neural network layer, and a data volume ratio of output data of adjacent neural network layers; and determine the value of M based on the value of N and the ratio of the data volume of the first output data to the data volume of the second output data.

The deployment module 1106 is configured to: based on a computing specification of a computing unit in the neural network system, deploy N first weights for P computing units, and deploy M second weights for Q computing units. Herein, both P and Q are positive integers. The P computing units are configured to perform an operation of the first neural network layer, and the Q computing units are configured to perform an operation of the second neural network layer. Herein, the computing specification of the computing unit indicates a quantity of crossbars included in the computing unit. In actual application, one computing unit may include one or more crossbars. Specifically, after the computing module 1104 obtains a quantity of weights that need to be configured for each neural network layer, the deployment module 1106 may deploy the weight of each layer for a corresponding computing unit based on a quantity of crossbars included in each computing unit. Specifically, each element in a weight matrix is deployed for a ReRAM cell of a crossbar in a computing unit. In this embodiment of the present invention, the computing unit may be a PE or an engine. One PE may include a plurality of engines, and one engine may include one or more crossbars. Because each layer may have different sizes of weights, one weight may be deployed for one or more engines.

As described above, the neural network system shown in FIG. 1 includes a plurality of neural network chips, each neural network chip includes a plurality of level 2 computing nodes, and each level 2 computing node includes a plurality of computing units. To further reduce a data transmission volume between computing units of different neural network layers and save transmission bandwidth between computing units or computing nodes, the resource allocation apparatus 1100 may further include a mapping module 1108, configured to map a computing unit to a higher-level computing node of the computing unit. Specifically, after the computing module 1104 obtains the N first weights that need to be configured for the first neural network layer and the M second weights that need to be configured for the second neural network layer, the mapping module 1108 is configured to: establish a mapping relationship between each of the N first weights and each of the P computing units, and establish a mapping relationship between each of the M second weights and each of the Q computing units. Further, the mapping module 1108 is further configured to map the P computing units and the Q computing units to a plurality of level 2 computing nodes based on a quantity of computing units included in a level 2 computing node in the neural network system. At least some of the P computing units and at least some of the Q computing units are mapped to a same level 2 computing node.

Further, the mapping module 1108 is further configured to map the plurality of level 2 computing units to which the P computing units and the Q computing units are mapped, to a plurality of neural network chips based on a quantity of level 2 computing units included in each neural network chip. Herein, at least some of level 2 computing nodes to which the P computing units belong and at least some of level 2 computing nodes to which the Q computing units belong are mapped to a same neural network chip.

In this embodiment of the present invention, refer to corresponding descriptions in FIG. 6, FIG. 6A, and FIG. 7 for how the mapping module 1108 establishes the mapping relationship between each of the N first weights and each of the P computing units, establishes the mapping relationship between each of the M second weights and each of the Q computing units, and separately maps the P computing units and the Q computing units to upper-level computing nodes of the computing units. Details are not described herein again.

An embodiment of the present invention further provides a computer program product for implementing the foregoing resource allocation method. In addition, an embodiment of the present invention also provides a computer program product for implementing the foregoing data processing method. Each of the computer program products includes a computer readable storage medium that stores program code. An instruction included in the program code is used for executing the method procedure described in any one of the foregoing method embodiments. An ordinary person skilled in the art may understand that the foregoing storage medium may include any non-transitory machine-readable medium capable of storing program code, such as a USB flash drive, a removable hard disk, a magnetic disk, an optical disc, a random-access memory (RAM), a solid-state drive (SSD), or a non-volatile memory.

**Claims**

1. A neural network system, comprising:

    P computing units for performing an operation of a first neural network layer, configured to receive first input data and perform computing on the first input data based on N configured replicas of a first weight matrix to obtain first output data; and

Q computing units for performing an operation of a second neural network layer, configured to receive second input data and perform computing on the second input data based on M configured replicas of a second weight matrix to obtain second output data, wherein the second input data comprises the first output data, wherein P, Q, N, and M are all positive integers, and a ratio of N to M corresponds to a ratio of a data volume of the first output data to a data volume of the second output data, and wherein the neural network system comprises a processor, the processor being configured to:

obtain (502) network model information of the neural network system; wherein the network model information includes the data volume of the first output data and the data volume of the second output data;

**characterised in that** the processor is further configured to:

determine (504) the quantity N of replicas of the first weight matrix for configuring the first neural network layer, and the quantity M of replicas of the second weight matrix for configuring the second neural network layer based on a deployment requirement of the neural network system, the data volume of the first output data and the data volume of the second output data;

deploy (506) the N replicas of the first weight matrix for the P computing units, and the M replicas of the second weight matrix for the Q computing units based on a computing specification of a computing unit in the neural network system, such that the computing capabilities of the P computing units match the computing capabilities of the Q computing units.

2.  The neural network system according to claim 1, wherein the neural network system comprises a plurality of neural network chips, each neural network chip comprises a plurality of level 2 computing nodes, each level 2 computing node comprises a plurality of computing units, and each computing unit comprises at least one resistive random access memory crossbar, ReRAM, crossbar.

3.  The neural network system according to claim 1, wherein the deployment requirement comprises a computing delay, the first neural network layer is a beginning layer of all neural network layers in the neural network system, the value of N is determined based on the data volume of the first output data, the computing delay, and a computing frequency of a ReRAM crossbar, and a value of M is determined based on the value of N and the ratio of the data volume of the first output data to the data volume of the second output data.

4.  The neural network system according to claim 1, wherein the deployment requirement comprises a quantity of the neural network chips, the first neural network layer is a beginning layer of all neural network layers in the neural network system, the value of N is determined based on the quantity of neural network chips, a quantity of ReRAM crossbars in each chip, a quantity of ReRAM crossbars that are required for deploying a weight of each neural network layer, and a data volume ratio of output data of adjacent neural network layers, and the value of M is determined based on the value of N and the ratio of the data volume of the first output data to the data volume of the second output data.

5.  The neural network system according to any one of claims 2 to 4, wherein
at least some of the P computing units and at least some of the Q computing units are located in a same level 2 computing node.

6.  The neural network system according to any one of claims 2 to 4, wherein
at least some of level 2 computing nodes to which the P computing units belong and at least some of level 2 computing nodes to which the Q computing units belong are located in a same neural network chip.

7.  A data processing method, applied to a neural network system, wherein the method comprises:

receiving, by P computing units in the neural network system, first input data, wherein the P computing units are configured to perform an operation of a first neural network layer;
performing, by the P computing units, computing on the first input data based on N configured replicas of a first weight matrix, to obtain first output data;
receiving, by Q computing units in the neural network system, second input data, wherein the Q computing units are configured to perform an operation of a second neural network layer, and the second input data comprises the first output data; and
performing, by the Q computing units, computing on the second input data based on M configured replicas of a second weight matrix, to obtain second output data, wherein
P, Q, N, and M are all positive integers, and a ratio of N to M corresponds to a ratio of a data volume of the first output data to a data volume of the second output data, and wherein the method further comprises:

obtaining (502) network model information of the neural network system; wherein the network model information includes the data volume of the first output data and the data volume of the second output data; **characterised in that** the method further comprises:

determining (504) the quantity N of replicas of the first weight matrix for configuring the first neural network layer, and the quantity M of replicas of the second weight matrix for configuring the second neural network layer based on a deployment requirement of the neural network system, the data volume of the first output data and the data volume of the second output data;
deploying (506) the N replicas of the first weight matrix for the P computing units, and the M replicas of the second weight matrix for the Q computing units based on a computing specification of a computing unit in the neural network system, such that the computing capabilities of the P computing units match the computing capabilities of the Q computing units.

8. The data processing method according to claim 7, wherein the first neural network layer is a beginning layer of all neural network layers in the neural network system;

a value of N is determined based on the data volume of the first output data, a specified computing delay of the neural network system, and a computing frequency of a ReRAM crossbar in a computing unit; and
a value of M is determined based on the value of N and the ratio of the data volume of the first output data to the data volume of the second output data.

9. The data processing method according to claim 7, wherein the neural network system comprises a plurality of neural network chips, each neural network chip comprises a plurality of computing units, each computing unit comprises at least one resistive random access memory crossbar ReRAM crossbar, and the first neural network layer is a beginning layer in the neural network system;

a value of N is determined based on a quantity of the plurality of neural network chips, a quantity of ReRAM crossbars in each chip, a quantity of ReRAM crossbars that are required for deploying a weight of each neural network layer, and a volume ratio of output data of adjacent neural network layers; and
a value of M is determined based on the value of N and the ratio of the data volume of the first output data to the data volume of the second output data.

10. The data processing method according to any one of claims 7 to 9, wherein the neural network system comprises the plurality of neural network chips, each neural network chip comprises a plurality of level 2 computing nodes, and each level 2 computing node comprises the plurality of computing units; and
at least some of the P computing units and at least some of the Q computing units are located in a same level 2 computing node.

11. The data processing method according to claim 10, wherein
at least some of level 2 computing nodes to which the P computing units belong and at least some of level 2 computing nodes to which the Q computing units belong are located in a same neural network chip.

12. A computer program product, wherein the computer program product comprises program codes, a set of instructions in the program code are executed by a computer, to implement the data processing method according to any one of claims 7-11.

13. A computer-readable storage medium, comprising a set of instructions, wherein when the set of instructions run on a computer, the computer is enabled to perform the data processing method according to any one of claims 7-11.

**Patentansprüche**

1. Neuronales Netzwerksystem, das umfasst:

P Recheneinheiten zum Durchführen einer Operation einer ersten neuronalen Netzwerkschicht, die konfiguriert ist, um erste Eingangsdaten zu empfangen und eine Berechnung an den ersten Eingangsdaten basierend auf N konfigurierten Replikaten einer ersten Gewichtsmatrix durchzuführen, um erste Ausgangsdaten zu erhalten; und Q Recheneinheiten zum Durchführen einer Operation einer zweiten neuronalen Netzwerkschicht, die konfiguriert ist, um zweite Eingangsdaten zu empfangen und die Berechnung an den zweiten Eingangsdaten basierend auf M konfigurierten Replikaten einer zweiten Gewichtsmatrix durchzuführen, um zweite Ausgangsdaten zu erhalten, wobei die zweiten Eingangsdaten die ersten Ausgangsdaten umfassen, wobei P, Q, N und M alle positive ganze Zahlen sind und ein Verhältnis von N zu M einem Verhältnis eines Datenvolumens der ersten Ausgangsdaten zu einem Datenvolumen der zweiten Ausgangsdaten entspricht und wobei das neuronale Netzwerksystem einen Prozessor umfasst, wobei der Prozessor konfiguriert ist zum:

Erhalten (502) von Netzwerkmodellinformationen des neuronalen Netzwerksystems;
wobei die Netzwerkmodellinformationen das Datenvolumen der ersten Ausgangsdaten und das Datenvolumen der zweiten Ausgangsdaten einschließen;
**dadurch gekennzeichnet, dass** der Prozessor ferner konfiguriert ist zum:

Bestimmen (504) der Anzahl N der Replikate der ersten Gewichtsmatrix zum Konfigurieren der ersten neuronalen Netzwerkschicht und der Anzahl M der Replikate der zweiten Gewichtsmatrix zum Konfigurieren der zweiten neuronalen Netzwerkschicht basierend auf einer Bereitstellungsanforderung des neuronalen Netzwerksystems, dem Datenvolumen der ersten Ausgangsdaten und dem Datenvolumen der zweiten Ausgangsdaten;
Bereitstellen (506) der N Replikate der ersten Gewichtsmatrix für die P Recheneinheiten und der M Replikate der zweiten Gewichtsmatrix für die Q Recheneinheiten basierend auf einer Rechenspezifikation einer Recheneinheit in dem neuronalen Netzwerksystem derart, dass die Rechenleistungen der P Recheneinheiten zu den Rechenleistungen der Q Recheneinheiten passen.

2. Neuronales Netzwerksystem nach Anspruch 1, wobei das neuronale Netzwerksystem eine Vielzahl von neuronalen Netzwerkchips umfasst, jeder neuronale Netzwerkchip eine Vielzahl von Rechenknoten einer Ebene 2 umfasst, jeder Rechenknoten der Ebene 2 eine Vielzahl von Recheneinheiten umfasst und jede Recheneinheit mindestens eine Kreuzschiene eines resistiven Speichers mit wahlfreiem Zugriff (ReRAM-Kreuzschiene) umfasst.

3. Neuronales Netzwerksystem nach Anspruch 1, wobei die Bereitstellungsanforderung eine Rechenverzögerung umfasst, die erste neuronale Netzwerkschicht eine Anfangsschicht aller neuronalen Netzwerkschichten in dem neuronalen Netzwerksystem ist, der Wert von N basierend auf dem Datenvolumen der ersten Ausgangsdaten, der Rechenverzögerung und einer Rechenfrequenz einer ReRAM-Kreuzschiene bestimmt wird, und ein Wert von M basierend auf dem Wert von N und dem Verhältnis des Datenvolumens der ersten Ausgangsdaten zu dem Datenvolumen der zweiten Ausgangsdaten bestimmt wird.

4. Neuronales Netzwerksystem nach Anspruch 1, wobei die Bereitstellungsanforderung eine Anzahl der neuronalen Netzwerkchips umfasst, die erste neuronale Netzwerkschicht eine Anfangsschicht aller neuronalen Netzwerkschichten in dem neuronalen Netzwerksystem ist, der Wert von N basierend auf der Anzahl von neuronalen Netzwerkchips, einer Anzahl von ReRAM-Kreuzschienen in jedem Chip, einer Anzahl von ReRAM-Kreuzschienen, die zum Bereitstellen eines Gewichts jeder neuronalen Netzwerkschicht erforderlich sind, und einem Datenvolumenverhältnis von Ausgangsdaten benachbarter neuronaler Netzwerkschichten bestimmt wird, und der Wert von M basierend auf dem Wert von N und dem Verhältnis des Datenvolumens der ersten Ausgangsdaten zu dem Datenvolumen der zweiten Ausgangsdaten bestimmt wird.

5. Neuronales Netzwerksystem nach einem der Ansprüche 2 bis 4, wobei mindestens einige der P Recheneinheiten und mindestens einige der Q Recheneinheiten sich in einem selben Rechenknoten der Ebene 2 befinden.

6. Neuronales Netzwerksystem nach einem der Ansprüche 2 bis 4, wobei mindestens einige der Rechenknoten der Ebene 2, zu denen die P Recheneinheiten gehören, und mindestens einige der Rechenknoten der Ebene 2, zu denen die Q Recheneinheiten gehören, sich in einem selben neuronalen Netzwerkchip befinden.

7. Datenverarbeitungsverfahren, das auf ein neuronales Netzwerksystem angewendet wird, wobei das Verfahren umfasst:

Empfangen, durch P Recheneinheiten in dem neuronalen Netzwerksystem, von ersten Eingangsdaten, wobei die P Recheneinheiten konfiguriert sind, um eine Operation einer ersten neuronalen Netzwerkschicht durchzuführen;

Durchführen, durch die P Recheneinheiten, der Berechnung an den ersten Eingangsdaten basierend auf N konfigurierten Replikaten einer ersten Gewichtsmatrix, um erste Ausgangsdaten zu erhalten;

Empfangen, durch Q Recheneinheiten in dem neuronalen Netzwerksystem, von zweiten Eingangsdaten, wobei die Q Recheneinheiten konfiguriert sind, um eine Operation einer zweiten neuronalen Netzwerkschicht durchzuführen, und die zweiten Eingangsdaten die ersten Ausgangsdaten umfassen; und

Durchführen, durch die Q Recheneinheiten, der Berechnung an den zweiten Eingangsdaten basierend auf M konfigurierten Replikaten einer zweiten Gewichtsmatrix, um zweite Ausgangsdaten zu erhalten, wobei P, Q, N und M alle positive ganze Zahlen sind und ein Verhältnis von N zu M einem Verhältnis eines Datenvolumens der ersten Ausgangsdaten zu einem Datenvolumen der zweiten Ausgangsdaten entspricht und wobei das Verfahren ferner umfasst:

Erhalten (502) von Netzwerkmodellinformationen des neuronalen Netzwerksystems, wobei die Netzwerkmodellinformationen das Datenvolumen der ersten Ausgangsdaten und das Datenvolumen der zweiten Ausgangsdaten einschließen;

**dadurch gekennzeichnet, dass** das Verfahren ferner umfasst:

Bestimmen (504) der Anzahl N der Replikate der ersten Gewichtsmatrix zum Konfigurieren der ersten neuronalen Netzwerkschicht und der Anzahl M der Replikate der zweiten Gewichtsmatrix zum Konfigurieren der zweiten neuronalen Netzwerkschicht basierend auf einer Bereitstellungsanforderung des neuronalen Netzwerksystems, dem Datenvolumen der ersten Ausgangsdaten und dem Datenvolumen der zweiten Ausgangsdaten;

Bereitstellen (506) der N Replikate der ersten Gewichtsmatrix für die P Recheneinheiten und der M Replikate der zweiten Gewichtsmatrix für die Q Recheneinheiten basierend auf einer Rechenspezifikation einer Recheneinheit in dem neuronalen Netzwerksystem derart, dass die Rechenleistungen der P Recheneinheiten zu den Rechenleistungen der Q Recheneinheiten passen.

8. Datenverarbeitungsverfahren nach Anspruch 7, wobei die erste neuronale Netzwerkschicht eine Anfangsschicht aller neuronalen Netzwerkschichten in dem neuronalen Netzwerksystem ist;

ein Wert von N basierend auf dem Datenvolumen der ersten Ausgangsdaten, einer spezifizierten Rechenverzögerung des neuronalen Netzwerksystems und einer Rechenfrequenz einer ReRAM-Kreuzschiene in einer Recheneinheit bestimmt wird; und

ein Wert von M basierend auf dem Wert von N und dem Verhältnis des Datenvolumens der ersten Ausgangsdaten zu dem Datenvolumen der zweiten Ausgangsdaten bestimmt wird.

9. Datenverarbeitungsverfahren nach Anspruch 7, wobei das neuronale Netzwerksystem eine Vielzahl von neuronalen Netzwerkchips umfasst, jeder neuronale Netzwerkchip eine Vielzahl von Recheneinheiten umfasst, jede Recheneinheit mindestens eine Kreuzschiene des resistiven Speichers mit wahlfreiem Zugriff (ReRAM-Kreuzschiene) umfasst und die erste neuronale Netzwerkschicht eine Anfangsschicht in dem neuronalen Netzwerksystem ist;

ein Wert von N basierend auf einer Anzahl der Vielzahl von neuronalen Netzwerkchips, einer Anzahl von ReRAM-Kreuzschienen in jedem Chip, einer Anzahl von ReRAM-Kreuzschienen, die zum Bereitstellen eines Gewichts jeder neuronalen Netzwerkschicht erforderlich sind, und einem Volumenverhältnis von Ausgangsdaten benachbarter neuronaler Netzwerkschichten bestimmt wird; und

ein Wert von M basierend auf dem Wert von N und dem Verhältnis des Datenvolumens der ersten Ausgangsdaten zu dem Datenvolumen der zweiten Ausgangsdaten bestimmt wird.

10. Datenverarbeitungsverfahren nach einem der Ansprüche 7 bis 9, wobei das neuronale Netzwerksystem die Vielzahl von neuronalen Netzwerkchips umfasst, jeder neuronale Netzwerkchip eine Vielzahl von Rechenknoten der Ebene 2 umfasst und jeder Rechenknoten der Ebene 2 die Vielzahl von Recheneinheiten umfasst; und mindestens einige der P Recheneinheiten und mindestens einige der Q Recheneinheiten sich in einem selben Rechenknoten der Ebene 2 befinden.

11. Datenverarbeitungsverfahren nach Anspruch 10, wobei
mindestens einige der Rechenknoten der Ebene 2, zu denen die P Recheneinheiten gehören, und mindestens einige der Rechenknoten der Ebene 2, zu denen die Q Recheneinheiten gehören, sich in einem selben neuronalen Netzwerkchip befinden.

12. Computerprogrammprodukt, wobei das Computerprogrammprodukt Programmcodes umfasst, wobei ein Satz von Anweisungen in dem Programmcode durch einen Computer ausgeführt wird, um das Datenverarbeitungsverfahren nach einem der Ansprüche 7 bis 11 zu implementieren.

13. Computerlesbares Speichermedium, das einen Satz von Anweisungen umfasst, wobei, wenn der Satz von Anweisungen auf einem Computer laufen gelassen wird, der Computer in die Lage versetzt wird, das Datenverarbeitungsverfahren nach einem der Ansprüche 7 bis 11 durchzuführen.

**Revendications**

1. Système de réseau neuronal comprenant :

   P unités de calcul permettant de réaliser une opération d'une première couche de réseau neuronal, configurée pour recevoir des premières données d'entrée, et de réaliser un calcul sur les premières données d'entrée sur la base de N répliques configurées d'une première matrice de pondération pour obtenir des premières données de sortie ; et
   Q unités de calcul permettant de réaliser une opération d'une seconde couche de réseau neuronal, configurée pour recevoir des secondes données d'entrée, et de réaliser un calcul sur les secondes données d'entrée sur la base de M répliques configurées d'une seconde matrice de pondération pour obtenir des secondes données de sortie, dans lequel les secondes données d'entrée comprennent les premières données de sortie, dans lequel P, Q, N, et M sont tous des nombres entiers positifs, et un rapport de N à M correspond à un rapport entre un volume de données des premières données de sortie et un volume de données des secondes données de sortie, et dans lequel le système de réseau neuronal comprend un processeur, le processeur étant configuré pour :

      obtenir (502) des informations de modèle de réseau du système de réseau neuronal ;
      dans lequel les informations de modèle de réseau comportent le volume de données des premières données de sortie et le volume de données des secondes données de sortie ;
      **caractérisé en ce que** le processeur est en outre configuré pour :

         déterminer (504) la quantité N de répliques de la première matrice de pondération permettant de configurer la première couche de réseau neuronal, et la quantité M de répliques de la seconde matrice de pondération permettant de configurer la seconde couche de réseau neuronal sur la base d'une exigence de déploiement du système de réseau neuronal, du volume de données des premières données de sortie et du volume de données des secondes données de sortie ;
         déployer (506) les N répliques de la première matrice de pondération pour les P unités de calcul, et les M répliques de la seconde matrice de pondération pour les Q unités de calcul sur la base d'une spécification de calcul d'une unité de calcul dans le système de réseau neuronal, de telle sorte que les capacités de calcul des P unités de calcul concordent avec les capacités de calcul des Q unités de calcul.

2. Système de réseau neuronal selon la revendication 1, dans lequel le système de réseau neuronal comprend une pluralité de puces de réseau neuronal, chaque puce de réseau neuronal comprend une pluralité de nœuds de calcul de niveau 2, chaque nœud de calcul de niveau 2 comprend une pluralité d'unités de calcul, et chaque unité de calcul comprend au moins une crossbar de crossbar de mémoire vive résistive, ReRAM.

3. Système de réseau neuronal selon la revendication 1, dans lequel l'exigence de déploiement comprend un délai de calcul, la première couche de réseau neuronal est une couche de départ de toutes les couches de réseau neuronal dans le système de réseau neuronal, la valeur de N est déterminée sur la base du volume de données des premières données de sortie, du délai de calcul et d'une fréquence de calcul d'une crossbar ReRAM, et la valeur de M est déterminée sur la base de la valeur de N et du rapport entre le volume de données des premières données de sortie et le volume de données des secondes données de sortie.

4. Système de réseau neuronal selon la revendication 1, dans lequel l'exigence de déploiement comprend une quantité des puces de réseau neuronal, la première couche de réseau neuronal est une couche de départ de toutes les couches de réseau neuronal dans le système de réseau neuronal, la valeur de N est déterminée sur la base de la quantité de puces de réseau neuronal, une quantité de crossbar ReRAM dans chaque puce, une quantité de crossbar ReRAM nécessaires pour le déploiement d'une pondération de chaque couche de réseau neuronal, et un rapport de volume de données de données de sortie de couches de réseau neuronal adjacentes, et la valeur de M est déterminée sur la base de la valeur de N et du rapport entre le volume de données des premières données de sortie et le volume de données des secondes données de sortie.

5. Système de réseau neuronal selon l'une quelconque des revendications 2 à 4, dans lequel
au moins certaines des P unités de calcul et au moins certaines des Q unités de calcul sont situées dans un même nœud de calcul de niveau 2.

6. Système de réseau neuronal selon l'une quelconque des revendications 2 à 4, dans lequel
au moins certains des nœuds de calcul de niveau 2 auxquels appartiennent les P unités de calcul et au moins certains des nœuds de calcul de niveau 2 auxquels appartiennent les Q unités de calcul sont situés dans une même puce de réseau neuronal.

7. Procédé de traitement de données appliqué à un système de réseau neuronal, dans lequel le procédé comprend :

la réception, par P unités de calcul dans le système de réseau neuronal, de premières données d'entrée, dans lequel les P unités de calcul sont configurées pour réaliser une opération d'une première couche de réseau neuronal ;
la réalisation, par les P unités de calcul, du calcul sur les premières données d'entrée, sur la base de N répliques configurées d'une première matrice de pondération, pour obtenir des premières données de sortie ;
la réception, par Q unités de calcul dans le système de réseau neuronal, de secondes données d'entrée, dans lequel les Q unités de calcul sont configurées pour réaliser une opération d'une seconde couche de réseau neuronal, et les secondes données d'entrée comprennent les premières données de sortie ; et
la réalisation, par les Q unités de calcul, du calcul sur les secondes données d'entrée sur la base de M répliques configurées d'une seconde matrice de pondération, pour obtenir des secondes données de sortie, dans lequel P, Q, N, et M sont tous des nombres entiers positifs, et un rapport de N à M correspond à un rapport entre un volume de données des premières données de sortie et un volume de données des secondes données de sortie, et dans lequel le procédé comprend en outre :

l'obtention (502) d'informations sur le modèle de réseau du système de réseau neuronal ; dans lequel les informations de modèle de réseau comportent le volume de données des premières données de sortie et le volume de données des secondes données de sortie ;
**caractérisé en ce que** le procédé comprend en outre :

la détermination (504) de la quantité N de répliques de la première matrice de poids pour configurer la première couche de réseau neuronal, et de la quantité M de répliques de la seconde matrice de poids pour configurer la seconde couche de réseau neuronal sur la base d'une exigence de déploiement du système de réseau neuronal, du volume de données des premières données de sortie et du volume de données des secondes données de sortie ;
le déploiement (506) des N répliques de la première matrice de pondération pour les P unités de calcul, et des M répliques de la seconde matrice de pondération pour les Q unités de calcul sur la base d'une spécification de calcul d'une unité de calcul dans le système de réseau neuronal, de telle sorte que les capacités de calcul des P unités de calcul concordent avec les capacités de calcul des Q unités de calcul.

8. Procédé de traitement de données selon la revendication 7, dans lequel la première couche de réseau neuronal est une couche de départ de toutes les couches de réseau neuronal dans le système de réseau neuronal ;
une valeur de N est déterminée sur la base du volume de données des premières données de sortie, d'un délai de calcul spécifié du système de réseau neuronal et d'une fréquence de calcul d'une crossbar de ReRAM dans une unité de calcul ; et une valeur de M est déterminée sur la base de la valeur de N et du rapport entre le volume de données des premières données de sortie et le volume de données des secondes données de sortie.

9. Procédé de traitement de données selon la revendication 7, dans lequel le système de réseau neuronal comprend une pluralité de puces de réseau neuronal, chaque puce de réseau neuronal comprend une pluralité d'unités de calcul, chaque unité de calcul comprend au moins une crossbar de crossbar de mémoire vive résistive ReRAM, et la première couche de réseau neuronal est une couche de départ dans le système de réseau neuronal ;

une valeur de N est déterminée sur la base d'une quantité de la pluralité de puces de réseau neuronal, d'une quantité de crossbar ReRAM dans chaque puce, d'une quantité de crossbar ReRAM nécessaires pour le déploiement d'une pondération de chaque couche de réseau neuronal, et d'un rapport de volume de données de sortie des couches de réseau neuronal adjacentes ; et

une valeur de M est déterminée sur la base de la valeur de N et du rapport entre le volume de données des premières données de sortie et le volume de données des secondes données de sortie.

10. Procédé de traitement de données selon l'une quelconque des revendications 7 à 9, dans lequel le système de réseau neuronal comprend la pluralité de puces de réseau neuronal, chaque puce de réseau neuronal comprend une pluralité de nœuds de calcul de niveau 2, et chaque nœud de calcul de niveau 2 comprend la pluralité d'unités de calcul ; et

au moins certaines des P unités de calcul et au moins certaines des Q unités de calcul sont situées dans un même nœud de calcul de niveau 2.

11. Procédé de traitement de données selon la revendication 10, dans lequel au moins certains des nœuds de calcul de niveau 2 auxquels appartiennent les P unités de calcul et au moins certains des nœuds de calcul de niveau 2 auxquels appartiennent les Q unités de calcul sont situés dans une même puce de réseau neuronal.

12. Produit-programme informatique, dans lequel le produit-programme informatique comprend des codes de programme, un ensemble d'instructions dans le code de programme sont exécutées par un ordinateur, pour mettre en œuvre le procédé de traitement de données selon l'une quelconque des revendications 7 à 11.

13. Support de stockage lisible par ordinateur, comprenant un ensemble d'instructions, dans lequel, lorsque l'ensemble d'instructions sont exécutées sur un ordinateur, l'ordinateur est capable de réaliser le procédé de traitement de données selon l'une quelconque des revendications 7 à 11.

EP 3 889 844 B1

FIG. 1

23

FIG. 1A

FIG. 2

FIG. 3

FIG. 4

Obtain network model information of a neural network system — 502

Determine a quantity N of first weights that need to be configured for a first neural network layer, and a quantity M of second weights that need to be configured for a second neural network layer, based on a deployment requirement and the network model information of the neural network system — 504

Deploy the N first weights for P computing units, and deploy the M second weights for Q computing units based on a computing specification of a computing unit in the neural network system — 506

FIG. 5

| Obtain network model information of a neural network system | 602 |

↓

| Determine N first weights that need to be configured for a first neural network layer, and M second weights that need to be configured for a second neural network layer, based on a deployment requirement and the network model information of the neural network system | 604 |

↓

| Determine P computing units for which the N first weights need to be deployed and Q computing units for which the M second weights need to be deployed, based on a computing specification of a computing unit in the neural network system | 606 |

↓

| Map the P computing units and the Q computing units to a plurality of level 3 computing nodes based on a quantity of computing units included in a level 3 computing node in the neural network system | 608 |

↓

| Map the plurality of level 3 computing nodes to which the P computing units and the Q computing units are mapped, to a plurality of level 2 computing nodes, based on a quantity of level 3 computing units included in a level 2 computing node in the neural network system | 610 |

↓

| Map the plurality of level 2 computing units to which the P computing units and the Q computing units are mapped, to a plurality of neural network chips based on a quantity of level 2 computing units included in each neural network chip | 612 |

↓

| Separately deploy the N first weights and the M second weights for the P computing units and the Q computing units corresponding to a plurality of level 3 nodes, a plurality of level 2 computing nodes, and a plurality of level 1 computing nodes | 614 |

FIG. 6

Divide P computing units and Q computing units into m groups — 6082

Map each group of computing units to a level 3 computing node based on a quantity of computing units included in a level 3 computing node — 6084

FIG. 6A

| Neural network layer | First group | | | | Second group | | | |
|---|---|---|---|---|---|---|---|---|
| | Quantity of computing units | Level 3 computing node | Level 2 computing node | Level 1 computing node | Quantity of computing units | Level 3 computing node | Level 2 computing node | Level 1 computing node |
| $(i-1)^{th}$ layer | 4 | PE 1 | Tile 1 | Chip 1 | 4 | PE 3 | Tile 2 | Chip 1 |
| $i^{th}$ layer | 2 | PE 2 | Tile 1 | Chip 1 | 2 | PE 4 | Tile 2 | Chip 1 |
| $(i+1)^{th}$ layer | 2 | PE 2 | Tile 1 | Chip 1 | 2 | PE 4 | Tile 2 | Chip 1 |
| ... | ... | ... | ... | ... | ... | ... | ... | ... |

FIG. 7

P computing units in a neural network system receive first input data 802

The P computing units perform computing on the first input data based on N configured first weights, to obtain first output data 804

Q computing units in the neural network system receive second input data, where the second input data includes the first output data 806

The Q computing units perform computing on the second input data based on M configured second weights, to obtain second output data 808

FIG. 8

| $W_{0,0}$ | $W_{0,1}$ | * | * | * | $W_{0,k-1}$ |
|---|---|---|---|---|---|
| $W_{1,0}$ | $W_{1,1}$ | * | * | * | $W_{1,k-1}$ |
| $W_{2,0}$ | $W_{2,1}$ | * | * | * | $W_{2,k-1}$ |
| $W_{3,0}$ | $W_{3,1}$ | * | * | * | $W_{3,k-1}$ |
| * | * | * | * | * | * |
| * | * | * | * | * | * |
| * | * | * | * | * | * |
| $W_{j-1,0}$ | $W_{j-1,1}$ | * | * | * | $W_{j-1,k-1}$ |

FIG. 9

FIG. 10

1100

Resource allocation apparatus

Obtaining module — 1102

Computing module — 1104

Mapping module — 1108

Deployment module — 1106

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018113649 A1

### Non-patent literature cited in the description

- **LI JIAJUN LIJIAJUN@ICT AC CN et al.** Synergy-Flow'', ACM TRANSACTIONS ON DESIGN AUTOMATION OF ELECTRONIC SYSTEMS. ACM, 21 December 2018, vol. 24, 1-27

- **ALI SHAFIEE et al.** ISAAC'', ACM SIGARCH COMPUTER ARCHITECTURE NEWS. *ACM SPECIAL INTEREST GROUP ON COMPUTER ARCHITECTURE*, 18 June 2016, vol. 44 (3), ISSN 0163-5964, 14-26